# EUROPEAN PATENT APPLICATION

(11) **EP 4 235 894 A1**
(43) Date of publication of application: **30.08.2023**
(21) Application number: 21964277.4
(22) Date of filing: 30.12.2021
(51) Int. Cl.: H01M 10/0525

(54) **ELECTRODE ASSEMBLY, SECONDARY BATTERY, BATTERY MODULE, BATTERY PACK, AND ELECTRIC DEVICE**

(71) Applicant: Contemporary Amperex Technology Co., Limited, Ningde City, Fujian 352100 (CN)
(72) Inventor: HE, Xiaoning, Fujian 352100 (CN); XUE, Wenwen, Fujian 352100 (CN); LIU, Chengyong, Fujian 352100 (CN); ZOU, Jieliang, Fujian 352100 (CN); ZHONG, Chengbin, Fujian 352100 (CN)
(74) Representative: Gong, Jinping
(86) International application number: PCT/CN2021/142975
(87) International publication number: WO 2023/123186

(57) **Abstract**

This application provides an electrode assembly, a secondary battery, a battery module, a battery pack, and an electrical device. The electrode assembly includes a positive electrode plate containing a positive active material and a negative electrode plate. The positive electrode plate includes at least one positive bend portion and at least one positive flat straight portion connected to the positive bend portion. At least one positive bend portion in the positive electrode plate is a first bend portion. At least a part of the positive active material of the first bend portion includes a polymer coating layer capable of obstructing migration of active ions. A ratio of an ionic conductivity λ₁ of the first bend portion to an ionic conductivity λ₂ of the positive flat straight portion satisfies 0 ≤ λ₁/λ₂ < 1. This application enhances safety performance of the secondary battery.

## Description

### TECHNICAL FIELD

This application relates to the technical field of batteries, and in particular, to an electrode assembly, a secondary battery, a battery module, a battery pack, and an electrical device.

### BACKGROUND

In recent years, secondary batteries have been widely applied in energy storage power systems such as hydro, thermal, wind, and solar power stations, and in many other fields such as electric tools, electric bicycles, electric motorcycles, and electric vehicles, military equipment, and aerospace. With the application and popularization of secondary batteries, the safety problem of the secondary batteries is attracting more and more attention. If the safety of a secondary battery is not guaranteed, the secondary battery is not suitable for use. Therefore, how to enhance the safety performance of the secondary battery is an urgent technical problem to be solved currently.

### SUMMARY

An objective of this application is to provide an electrode assembly, a secondary battery, a battery module, a battery pack, and an electrical device to enhance safety performance of the secondary battery.

A first aspect of this application provides an electrode assembly. The electrode assembly includes a positive electrode plate containing a positive active material and a negative electrode plate. The positive electrode plate includes at least one positive bend portion and at least one positive flat straight portion connected to the positive bend portion. At least one positive bend portion in the positive electrode plate is a first bend portion. At least a part of the positive active material of the first bend portion includes a polymer coating layer capable of obstructing migration of active ions. A ratio of an ionic conductivity λ₁ of the first bend portion to an ionic conductivity λ₂ of the positive flat straight portion satisfies 0 ≤ λ₁/λ₂ < 1.

Through a simple treatment process of the positive electrode plate, this application effectively reduces the probability that active ions in a bend region of the electrode assembly are reduced to a simple metal, thereby significantly improving the safety performance of the electrode assembly. At least a part of the positive active material of the first bend portion includes a polymer coating layer capable of obstructing migration of active ions, so that the first bend portion possesses a lower ionic conductivity. During charging, at least a part of the active ions deintercalated from the positive active material of the first bend portion are obstructed by the polymer coating layer from being intercalated into an adjacent negative film layer, thereby effectively reducing the probability that the active ions in the bend region of the electrode assembly are reduced to a simple metal, and significantly improving the safety performance of the electrode assembly.

In any embodiment of this application, 0 ≤ λ₁/λ₂ ≤ 0.9. Optionally, 0 < λ₁/λ₂ ≤ 0.9. In this way, the occurrence of reducing the active ions in the bend region of the electrode assembly to a simple metal can be avoided effectively without excessively reducing the energy density of the electrode assembly.

In any embodiment of this application, the electrode assembly is a jelly-roll structure. In the jelly-roll structure, at least one innermost positive bend portion in the positive electrode plate is the first bend portion. At the innermost negative bend portion of the j elly-roll structure, the probability of reducing the active ions to a simple metal is the highest. Therefore, such an arrangement significantly improves the safety performance of the electrode assembly.

In any embodiment of this application, a thickness of the polymer coating layer is 0.01 µm to 50 µm. Optionally, the thickness of the polymer coating layer is 1 µm to 10 µm. When the thickness of the polymer coating layer falls within an appropriate range, the occurrence of reducing the active ions in the bend region of the electrode assembly to a simple metal can be avoided effectively without excessively reducing the energy density of the electrode assembly.

In any embodiment of this application, the polymer coating layer is located on 80% to 100% of surfaces of particles of the positive active material. Optionally, the polymer coating layer is located on 95% to 100% of the surfaces of the particles of the positive active material. The polymer coating layer is located on almost all surfaces of the particles of the positive active material, thereby being able to effectively obstruct migration of the active ions and effectively avoid the occurrence of reducing the active ions in the bend region of the electrode assembly to a simple metal.

In any embodiment of this application, the polymer coating layer further includes one or more selected from a plasticizer and an electrolyte salt. The presence of the plasticizer facilitates formation of a gel-type polymer coating layer. The electrolyte salt increases the ionic conductivity of the polymer coating layer. In this way, the occurrence of reducing the active ions in the bend region of the electrode assembly to a simple metal can be avoided effectively without excessively reducing the energy density of the electrode assembly. Optionally, the plasticizer includes one or more selected from ethyl methyl carbonate, diethyl carbonate, dimethyl carbonate, dipropyl carbonate, methyl propyl carbonate, ethylene propyl carbonate, methyl formate, methyl acetate, ethyl acetate, propyl acetate, methyl propionate, ethyl propionate, propyl propionate, methyl butyrate, ethyl butyrate, 1,4-butyrolactone, methyl sulfonyl methane, ethyl methyl sulfone, and (ethylsulfonyl)ethane. Optionally, the electrolyte salt includes one or more selected from a lithium salt and a sodium salt, and optionally, the electrolyte salt includes one or more selected from lithium hexafluorophosphate, lithium tetrafluoroborate, lithium perchlorate, lithium hexafluoroarsenate, lithium bisfluorosulfonimide, lithium bis(trifluoromethanesulfonyl)imide, lithium trifluoromethanesulfonate, lithium difluoro(oxalato)borate, lithium bis(oxalato)borate, lithium difluorophosphate, lithium difluoro(bisoxalato)phosphate, lithium tetrafluoro(oxalato)phosphate, NaPF₆, NaClO₄, NaBCl₄, NaSO₃CF₃, and Na(CH₃)C₆H₄SO₃.

In any embodiment of this application, based on a total mass of the polymer coating layer, the polymer coating layer includes a polymer at a mass percent of 5% to 100%, the plasticizer at a mass percent of 0% to 80%, and the electrolyte salt at a mass percent of 0% to 20%.

In any embodiment of this application, the polymer coating layer is formed by in-situ polymerizing and curing a coating composition that includes at least one monomer.

In any embodiment of this application, the monomer includes one or more of a first monomer or a second monomer.

In any embodiment of this application, the first monomer is ring-opening polymerizable or includes a polymerizable unsaturated bond. Optionally, the first monomer is one or more selected from a carbonate monomer, a sulfate monomer, a sulfonate monomer, a phosphate monomer, a carboxylate monomer, a sulfone monomer, an amide monomer, a nitrile monomer, and an ether monomer.

In any embodiment of this application, the second monomer is cross-linkable. Optionally, the second monomer is one or more selected from acrylate monomers.

In any embodiment of this application, the monomer is the first monomer.

In any embodiment of this application, the monomer includes both the first monomer and the second monomer, and a mass ratio between the first monomer and the second monomer is (1 to 99): (99 to 1). Optionally, a mass ratio between the first monomer and the second monomer is (25 to 75): (75 to 25).

In any embodiment of this application, the carbonate monomer includes one or more selected from vinylene carbonate, vinyl ethylene carbonate, ethylene carbonate, propylene carbonate, butylene carbonate, fluoroethylene carbonate, and chloroethylene carbonate.

In any embodiment of this application, the sulfate monomer includes one or more selected from vinyl ethylene sulfite, ethylene sulfite, 4-methyl ethylene sulfate, and 4-ethyl ethylene sulfate.

In any embodiment of this application, the sulfonate monomer is one or more selected from 1,3-propene sultone, 1,3-propane sultone, 1,4-butane sultone, and methylene methane di sulfonate.

In any embodiment of this application, the phosphate monomer includes one or more selected from dimethyl vinyl phosphate, diethyl vinyl phosphate, diethyl propenyl phosphate, diethyl butenyl phosphate, 2-diethoxyphosphorylbut-1-ene, diethylethynyl phosphate, vinyl trifluoromethyl phosphate, vinyl-1-trifluoroethyl phosphate, diethyl fluorovinyl phosphate, and 1-trifluoropropenyl ethyl phosphate.

In any embodiment of this application, the carboxylate monomer includes vinyl acetate.

In any embodiment of this application, the sulfone monomer includes one or more selected from methyl vinyl sulfone, ethyl vinyl sulfone, cyclobutene sulfone, sulfolane, and ethylene sulfoxide.

In any embodiment of this application, the amide monomer includes acrylamide.

In any embodiment of this application, the nitrile monomer includes one or more selected from acrylonitrile, succinonitrile, glutaronitrile, and adiponitrile.

In any embodiment of this application, the ether monomer includes one or more selected from 1,3-dioxolane, ethylene oxide, 1,2-propylene oxide, 4-methyl-1,3-dioxolane, tetrahydrofuran, 2-methyl tetrahydrofuran, 1,4-dioxane, ethylene glycol dimethyl ether, ethylene glycol diglycidyl ether, and triethylene glycol divinyl ether.

In any embodiment of this application, the acrylate monomers include one or more selected from acrylic acid, methacrylic acid, methyl methacrylate, butyl methacrylate, methyl acrylate, ethyl acrylate, hydroxyethyl acrylate, hydroxyethyl methacrylate, butyl acrylate, isodecyl acrylate, isooctyl acrylate, lauryl acrylate, isobornyl acrylate, isobornyl methacrylate, carbitol acrylate, cyanoacrylate, caprolactone acrylate, 2-phenoxyethyl acrylate, tetrahydrofuran acrylate, ethoxylated tetrahydrofuran acrylate, cyclotrimethylolpropane acrylate, 2-carboxyethyl acrylate, cyclohexyl acrylate, ethylene glycol diacrylate, ethylene glycol dimethacrylate, propylene glycol dimethacrylate, diethylene glycol diacrylate, diethylene glycol dimethacrylate, triethylene glycol diacrylate, triethylene glycol dimethacrylate, tetraethylene glycol diacrylate, tetraethylene glycol dimethacrylate, 1,4-butanediol diacrylate, 1,4-butanediol dimethacrylate, 1,3-butanediol diacrylate, 1,3-butanediol dimethacrylate, 1,6-hexanediol diacrylate, 1,6-hexanediol dimethacrylate, dipropylene glycol diacrylate, dipropylene glycol dimethacrylate, tripropylene glycol diacrylate, tripropylene glycol dimethacrylate, neopentyl glycol diacrylate, neopentyl glycol dimethacrylate, 2(propoxylated) neopentyl glycol diacrylate, polyethylene glycol diacrylate, polyethylene glycol dimethacrylate, polypropylene glycol dimethacrylate, polycyclohexyl acrylate, methoxyl polyethylene glycol acrylate, ethoxylated trimethylolpropane triacrylate, trimethylol propane trimethacrylate, methoxyl polyethylene glycol methacrylate, pentaerythritol triacrylate, propoxylated glycerol triacrylate, tris(2-hydroxyethyl) isocyanurate triacrylate, bis(trimethylolpropane) tetraacrylate, pentaerythritol tetraacrylate, 4(ethoxyl)pentaerythritol tetraacrylate, and dipentaerythritol hexaacrylate.

In any embodiment of this application, the coating composition further includes one or more selected from a plasticizer and an electrolyte salt. The plasticizer can adjust the viscosity of the coating composition, and facilitate a coating operation. The presence of the plasticizer further facilitates formation of a gel-type polymer coating layer. The electrolyte salt increases the ionic conductivity of the polymer coating layer. In this way, the occurrence of reducing the active ions in the bend region of the electrode assembly to a simple metal can be avoided effectively without excessively reducing the energy density of the electrode assembly.

In any embodiment of this application, the plasticizer includes one or more selected from ethyl methyl carbonate, diethyl carbonate, dimethyl carbonate, dipropyl carbonate, methyl propyl carbonate, ethylene propyl carbonate, methyl formate, methyl acetate, ethyl acetate, propyl acetate, methyl propionate, ethyl propionate, propyl propionate, methyl butyrate, ethyl butyrate, 1,4-butyrolactone, methyl sulfonyl methane, ethyl methyl sulfone, and (ethylsulfonyl)ethane.

In any embodiment of this application, the electrolyte salt includes one or more selected from a lithium salt and a sodium salt. Optionally, the electrolyte salt includes one or more selected from lithium hexafluorophosphate, lithium tetrafluoroborate, lithium perchlorate, lithium hexafluoroarsenate, lithium bisfluorosulfonimide, lithium bis(trifluoromethanesulfonyl)imide, lithium trifluoromethanesulfonate, lithium difluoro(oxalato)borate, lithium bis(oxalato)borate, lithium difluorophosphate, lithium difluoro(bisoxalato)phosphate, lithium tetrafluoro(oxalato)phosphate, NaPF₆, NaClO₄, NaBCl₄, NaSO3CF₃, and Na(CH₃)C₆H₄SO₃.

In any embodiment of this application, based on a total mass of the coating composition, the coating composition includes a monomer at a mass percent of 5% to 100%, the plasticizer at a mass percent of 0% to 80%, and the electrolyte salt at a mass percent of 0% to 20%.

In any embodiment of this application, a viscosity of the coating composition is 3 cp to 100 cp.

In any embodiment of this application, a polymerization method used to form the polymer coating layer by in-situ polymerizing and curing the monomer includes one or more selected from light-initiated polymerization, radiation-initiated polymerization, and initiator-initiated polymerization.

In any embodiment of this application, a power density of the light is 2 W/cm² to 5 W/cm², and the light-initiated polymerization lasts for a time of 10 s to 300 s.

In any embodiment of this application, a total dosage of the radiation is 30 Gy to 30 kGy.

In any embodiment of this application, a temperature of the initiator-initiated polymerization is 50 °C to 85 °C, and the initiator-initiated polymerization lasts for a time of 1 h to 12 h.

In any embodiment of this application, based on a total mass of the monomer, a mass percent of the initiator is less than or equal to 5%. Optionally, the mass percent of the initiator is less than or equal to 2%.

A second aspect of this application provides a secondary battery. The secondary battery includes the electrode assembly according to the first aspect of this application.

A third aspect of this application provides a battery module. The battery module includes the secondary battery according to the second aspect of this application.

A fourth aspect of this application provides a battery pack. The battery pack includes the battery module according to the third aspect of this application.

A fifth aspect of this application provides an electrical device. The electrical device includes at least one of the secondary battery according to the second aspect, the battery module according to the third aspect, or the battery pack according to the fourth aspect of this application.

Through a simple treatment process of the positive electrode plate, this application effectively improves the safety performance of the secondary battery without increasing much weight of the secondary battery. The battery module, the battery pack, and the electrical device according to this application include the secondary battery according to this application, and therefore, have at least the same advantages as the secondary battery.

### BRIEF DESCRIPTION OF DRAWINGS

To describe the technical solutions of the embodiments of this application more clearly, the following outlines the drawings to be used in the embodiments of this application. Evidently, the drawings outlined below are merely a part of embodiments of this application. A person of ordinary skill in the art may derive other drawings from such drawings without making any creative efforts.
FIG. 1 is a schematic diagram of an electrode assembly according to an embodiment of this application;
FIG. 2 is a schematic flowchart of a method for preparing an electrode assembly according to some embodiments of this application;
FIG. 3 is a schematic flowchart of a method for preparing a positive electrode plate according to some embodiments of this application;
FIG. 4 is a schematic flowchart of a method for preparing a positive electrode plate according to some other embodiments of this application;
FIG. 5 is a schematic flowchart of a method for preparing a positive electrode plate according to still other embodiments of this application;
FIG. 6 is a schematic diagram of a secondary battery according to an embodiment of this application.
FIG. 7 is a schematic exploded view of the secondary battery shown in FIG. 6.
FIG. 8 is a schematic diagram of a battery module according to an embodiment of this application;
FIG. 9 is a schematic diagram of a battery pack according to an embodiment of this application;
FIG. 10 is a schematic exploded view of the battery pack shown in FIG. 9;
FIG. 11 is a schematic diagram of an embodiment of an electrical device that contains a secondary battery of this application as a power supply;
FIG. 12 is a scanning electron microscope image of a positive electrode plate prepared in Comparative Embodiment 1;
FIG. 13 is a scanning electron microscope image of a positive electrode plate prepared in Embodiment 3;
FIG. 14 is a cycle curve of a pouch-type battery prepared in Comparative Embodiment 1; and
FIG. 15 is a cycle curve of a pouch-type battery prepared in Embodiment 11.

The drawings are not necessarily drawn to scale.

### DETAILED DESCRIPTION OF EMBODIMENTS

The following describes and discloses in detail embodiments of an electrode assembly, a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, all embodiments and optional embodiments hereof may be combined with each other to form a new technical solution considered to be included in the content disclosed in this application.

Unless otherwise expressly specified herein, all technical features and optional technical features hereof may be combined with each other to form a new technical solution considered to be included in the content disclosed in this application.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, any one of the following conditions satisfies the condition "A or B" : A is true (or existent) and B is false (or absent); A is false (or absent) and B is true (or existent); and, both A and B are true (or existent).

Unless otherwise expressly specified, the terms "concatenate" and "connect" used herein are understood in a broad sense. For example, a "connection" may be a fixed connection, a detachable connection, or an integrated connection; or may be a direct connection or indirect connection implemented through an intermediary; or may be internal communication between two components. A person of ordinary skill in the art is able to understand the specific meanings of the terms in this application according to specific situations.

Unless otherwise expressly specified, the terms such as "first", "second", "third", and "fourth" used herein are intended to distinguish between different items, but are not intended to describe a specific sequence or order of precedence.

Unless otherwise expressly specified herein, the term "active ion" used herein means an ion that can be shuttled between a positive electrode and a negative electrode of a secondary battery by intercalation and deintercalation, including but not limited to a lithium ion, a sodium ion, and the like.

Unless otherwise expressly specified herein, the term "monomer" used herein not only includes an organic micromolecule compound that is polymerizable, but also includes a prepolymer or an oligomer of an organic micromolecule compound, such as a prepolymer or an oligomer with a molecular weight not higher than 2000.

Unless otherwise expressly specified herein, the term "acrylate monomer" is a generic term of acrylic acid and derivatives thereof as well as esters of homologues thereof.

"A plurality of" referred to in this application means two or more (including two).

In this application, a secondary battery may be classed into a lithium-ion battery, a sodium-ion battery, and the like, without being limited herein. The secondary battery may be a water-based battery or an oil-based battery, without being limited herein. The secondary battery may be in various shapes such as a flat shape or a cuboid, without being limited herein.

A secondary battery, also known as a rechargeable battery or storage battery, is a battery that is reusable after an active material in the battery is activated by charging the battery that has been discharged. Generally, a secondary battery includes an electrode assembly and an electrolyte. The electrode assembly includes a positive electrode plate, a negative electrode plate, and a separator. The positive electrode plate includes a positive current collector and a positive film layer. The positive film layer is applied onto a surface of the positive current collector, and the positive film layer includes a positive active material. The negative electrode plate includes a negative current collector and a negative film layer. The negative film layer is applied onto a surface of the negative current collector, and the negative film layer includes a negative active material. In a charge-and-discharge cycle of the battery, active ions are shuttled between the positive electrode plate and the negative electrode plate by intercalation and deintercalation. Disposed between the positive electrode plate and the negative electrode plate, the separator primarily serves to prevent a short circuit between the positive electrode plate and the negative electrode plate, and is penetrable by the active ions. The electrolyte serves to conduct the active ions between the positive electrode plate and the negative electrode plate.

When the secondary battery is being charged, active ions are deintercalated from the positive active material of the positive film layer and intercalated into the negative active material of the negative film layer. However, some abnormal conditions may occur. For example, active ion sites available from the negative film layer are insufficient, a resistance to the intercalation of the active ions into the negative active material is excessively high, or the active ions are deintercalated from the positive active material prematurely but the deintercalated active ions are unable to be intercalated into the negative active material in an equal amount. Some active ions that are unable to be intercalated into the negative active material have to gain electrons and be reduced to a simple metal on the surface of the negative electrode plate.

The formed simple metal not only increases irreversible consumption of the active ions and greatly shortens the cycle life of the secondary battery, but also limits kinetic performance such as fast charge performance of the secondary battery. In addition, the simple metal such as simple-substance lithium is relatively reactive, and can react with an organic solvent in an electrolytic solution even at a relatively low temperature. Consequently, a starting temperature of self-heating of the secondary battery is lowered, and the self-heating speed increases, thereby severely impairing safety of the secondary battery. In addition, the simple metal keeps growing continuously to form dendrites on the surface of the negative electrode plate. The continuously growing dendrites are prone to pierce a separator and cause an internal short circuit in the secondary battery to cause hazards such as fire and explosion.

During the research and development, the inventor finds that, in a bend region of a jelly-roll electrode assembly, especially in an innermost region of the bend region, the radius of the positive electrode plate is much greater than the radius of an adjacent negative electrode plate. Consequently, the number of active ion sites available from the negative film layer in this region is much less than the number of the active ions that can be deintercalated from an adjacent positive film layer. Therefore, when the secondary battery is being charged, the active ions in this region are prone to be reduced to a simple metal on the negative electrode plate, thereby severely impairing the safety performance of the secondary battery.

In view of this, by improving the structure of the electrode assembly, the inventor hereof discloses an electrode assembly with significantly improved safety performance.

A first aspect of this application provides an electrode assembly. The electrode assembly includes a positive electrode plate containing a positive active material and a negative electrode plate. The positive electrode plate includes at least one positive bend portion and at least one positive flat straight portion connected to the positive bend portion. At least one positive bend portion in the positive electrode plate is a first bend portion. At least a part of the positive active material of the first bend portion includes a polymer coating layer capable of obstructing migration of active ions. A ratio of an ionic conductivity λ₁ of the first bend portion to an ionic conductivity λ₂ of the positive flat straight portion satisfies 0 ≤ λ₁/λ₂ < 1.

Through a simple treatment process of the positive electrode plate, this application effectively reduces the probability that active ions in a bend region of the electrode assembly are reduced to a simple metal, thereby significantly improving the safety performance of the electrode assembly. In the electrode assembly according to the first aspect of this application, at least a part of the positive active material of the first bend portion includes a polymer coating layer capable of obstructing migration of active ions, so that the first bend portion possesses a lower ionic conductivity. During charging, at least a part of the active ions deintercalated from the first bend portion are obstructed by the polymer coating layer from being intercalated into an adjacent negative film layer, thereby effectively reducing the probability that the active ions in the bend region of the electrode assembly are reduced to a simple metal, and significantly improving the safety performance of the electrode assembly. Therefore, although the number of active ion sites available from the negative film layer in the bend region of the electrode assembly remains unchanged, the number of active ions deintercalated from the positive film layer and intercalatable into the negative film layer is reduced, thereby effectively reducing the probability that the active ions in the bend region of the electrode assembly are reduced to a simple metal.

Through a simple treatment process of the positive electrode plate, this application effectively improves the safety performance of the electrode assembly without increasing much weight of the electrode assembly.

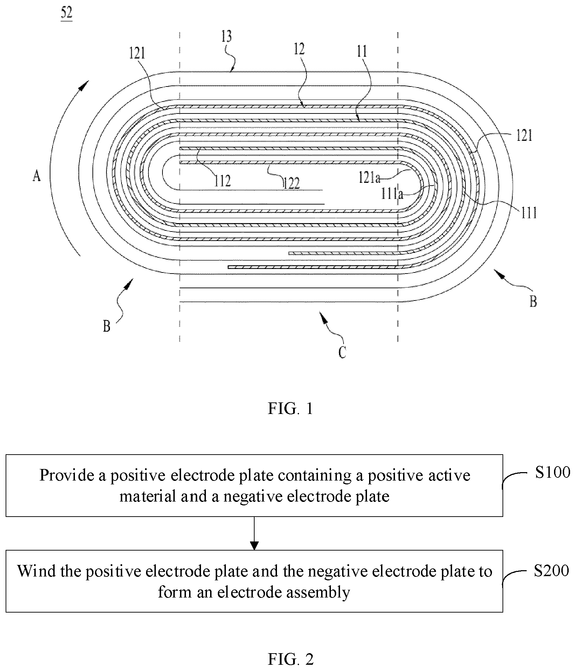

The electrode assembly according to the first aspect of this application is described in detail below with reference to FIG. 1.

FIG. 1 is a schematic diagram of an electrode assembly according to an embodiment of this application. As shown in FIG. 1, the electrode assembly 52 includes a positive electrode plate 11 and a negative electrode plate 12.

The positive electrode plate 11 includes a positive current collector and a positive film layer disposed on at least one surface of the positive current collector and containing a positive active material. For example, the positive current collector includes two surfaces opposite to each other in a thickness direction thereof. The positive film layer is disposed on either or both of the two opposite surfaces of the positive current collector.

The positive current collector may be a metal foil or a composite current collector. As an example of the metal foil, an aluminum foil may be used as the metal foil. The composite current collector may include a polymer material substrate and a metal material layer formed on at least one surface of the polymer material substrate. As an example, the metal material may include one or more selected from aluminum, an aluminum alloy, nickel, a nickel alloy, titanium, a titanium alloy, silver, and a silver alloy. As an example, the polymer material substrate may include one or more selected from polypropylene (PP), polyethylene terephthalate (PET), polybutylene terephthalate (PBT), polystyrene (PS), and polyethylene (PE).

The positive film layer generally includes a positive active material, an optional binder, and an optional conductive agent. The positive film layer is generally formed by applying a positive slurry onto the positive current collector and then performing drying and cold-calendering. The positive slurry is generally formed by dispersing a positive active material, an optional conductive agent, an optional binder, and any other ingredients into a solvent and then stirring well. The solvent may be, but without being limited to, N-methyl-pyrrolidone (NMP). As an example, the binder applicable to the positive film layer may include one or more selected from polyvinylidene difluoride (PVDF), polytetrafluoroethylene (PTFE), poly(vinylidene fluoride-co-tetrafluoroethylene-co-propylene), poly(vinylidene fluoride-co-hexafluoropropylene-co-tetrafluoroethylene), poly(tetrafluoroethylene-co-hexafluoropropylene), and fluorinated acrylate resin. As an example, the conductive agent applicable to the positive film layer may include one or more selected from superconductive carbon, conductive graphite, acetylene black, carbon black, Ketjen black, carbon dots, carbon nanotubes, graphene, and carbon nanofibers.

The positive active material may be a positive active material well known for use in a secondary battery in the art.

When the secondary battery in this application is a lithium-ion battery, the positive active material may include one or more selected from lithium transition metal oxide, olivine-structured lithium-containing phosphate, and a modified compound thereof. Examples of the lithium transition metal oxide include, but are not limited to, lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and a modified compound thereof. Examples of the olivine-structured lithium-containing phosphate include, but are not limited to, one or more of lithium iron phosphate, a composite of lithium iron phosphate and carbon, lithium manganese phosphate, a composite of lithium manganese phosphate and carbon, lithium manganese iron phosphate, or a composite of lithium manganese iron phosphate and carbon, or a modified compound thereof. This application is not limited to such materials, and other conventional and well-known materials that can be used as a positive electrode active material of the lithium-ion battery may be used instead. One of the positive active materials may be used alone, or at least two thereof may be used in combination.

In some embodiments, in order to further increase the energy density of the secondary battery, the positive active material for use in the lithium-ion battery may include one or more selected from the lithium transition metal oxide represented by Formula 1 and a modified compound thereof:

LiₐNi_{b}Co_{c}M_{d}OₑA_{f} Formula 1.

In Formula 1, 0.8 ≤ a ≤ 1.2, 0.5 ≤ b <1,0 < c < 1, 0 < d < 1, 1 ≤ e ≤ 2, 0 ≤ f ≤ 1, M is one or more selected from Mn, Al, Zr, Zn, Cu, Cr, Mg, Fe, V, Ti, and B, and A is one or more selected from N, F, S, and Cl.

As an example, the positive active material for use in a lithium-ion battery may include one or more selected from LiCoO₂, LiNiO₂, LiMnO₂, LiMn₂O₄, LiNi_{1/3}Co_{1/3}Mn_{1/3}O₂, LiNi_{0.5}Co_{0.2}Mn_{0.3}O₂, LiNi_{0.6}Co_{0.2}Mn_{0.2}O₂, LiNi_{0.8}Co_{0.1}Mn_{0.1}O₂, LiNi_{0.85}Co_{0.15}Al_{0.05}O₂, LiFePO₄, and LiMnPO₄.

When the secondary battery in this application is a sodium-ion battery, the positive active material may include one or more selected from sodium transition metal oxide NaₓMO₂ (M is a transition metal, and is preferably one or more selected from Mn, Fe, Ni, Co, V, Cu, and Cr, 0 < x ≤ 1), a polyanionic material (such as phosphate, fluorophosphate, pyrophosphate, and sulfate), and a Prussian blue material. This application is not limited to such materials, and other conventional well-known materials suitable for use as a positive active material of the sodium-ion battery may be used instead. One of the positive active materials may be used alone, or at least two thereof may be used in combination.

As an example, the positive active material for use in a sodium-ion battery may include one or more selected from NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material represented by a general formula AₐM_{b}(PO₄)_{c}OₓY₃₋ₓ. In the general formula, A is one or more selected from H⁺, Li⁺, Na⁺, K⁺, and NH₄⁺; and M is a transition metal cation, and is preferably one or more selected from V, Ti, Mn, Fe, Co, Ni, Cu, and Zn; Y is a halogen anion, and is preferably one or more selected from F, Cl, and Br; 0 < a ≤ 4, 0 < b ≤ 2, 1 ≤ c ≤3, and 0 ≤ x ≤ 2.

In this application, the modified compound of each positive active material described above may be a product of modifying the positive active material by doping or surface-coating.

The negative electrode plate 12 includes a negative current collector and a negative film layer disposed on at least one surface of the negative current collector and containing a negative active material. For example, the negative current collector includes two surfaces opposite to each other in a thickness direction thereof. The negative film layer is disposed on either or both of the two opposite surfaces of the negative current collector.

The negative current collector may be a metal foil or a composite current collector. As an example, the metal foil may be a copper foil. The composite current collector may include a polymer material substrate and a metal material layer formed on at least one surface of the polymer material substrate. As an example, the metal material may include one or more selected from copper, a copper alloy, nickel, a nickel alloy, titanium, a titanium alloy, silver, and a silver alloy. As an example, the polymer material substrate may include one or more selected from polypropylene (PP), polyethylene terephthalate (PET), polybutylene terephthalate (PBT), polystyrene (PS), and polyethylene (PE).

The negative film layer generally includes a negative active material, an optional binder, an optional conductive agent, and other optional agents. The negative film layer is generally formed by applying a negative slurry onto the negative current collector and then performing drying and cold-calendering. The negative slurry is generally formed by dispersing a negative active material, an optional conductive agent, an optional binder, and other optional agents into a solvent and then stirring well. The solvent may be, but without being limited to, N-methyl-pyrrolidone (NMP) or deionized water. As an example, the binder for use in the negative film layer may include one or more selected from styrene-butadiene rubber (SBR), water-soluble unsaturated resin SR-1B, aqueous acrylic resin (such as polyacrylic acid PAA, polymethacrylic acid PMAA, or polyacrylic acid sodium PAAS), polyacrylamide (PAM), polyvinyl alcohol (PVA), sodium alginate (SA), and carboxymethyl chitosan (CMCS). As an example, the conductive agent for use in the negative film layer may include one or more selected from superconductive carbon, acetylene black, carbon black, Ketjen black, carbon dots, carbon nanotubes, graphene, and carbon nanofibers. Other optional agents may include a thickener (such as sodium carboxymethyl cellulose CMC-Na), a PTC thermistor material, and the like.

The negative active material may be a negative active material well known for use in a secondary battery in the art. As an example, the negative active material may include one or more selected from natural graphite, artificial graphite, soft carbon, hard carbon, a silicon-based material, a tin-based material, and lithium titanium oxide. The silicon-based material may include one or more selected from simple-substance silicon, oxide of silicon, a silicon-carbon composite, a silicon-nitrogen composite, and a silicon alloy. The tin-based material may include one or more selected from simple-substance tin, oxide of tin, or a tin alloy. This application is not limited to such materials, and other conventional materials well known for use as a negative active material of a secondary battery may be used instead. One of the negative active materials may be used alone, or at least two thereof may be used in combination.

The negative electrode plate 12 according to this application does not exclude other additional functional layers different from the negative film layer. For example, in some embodiments, the negative electrode plate 12 according to this application further includes a conductive undercoat layer (for example, formed of a conductive agent and a binder) disposed on a surface of the negative current collector and sandwiched between the negative current collector and the negative film layer. In other embodiments, the negative electrode plate 12 according to this application further includes a protection layer that overlays the surface of the negative film layer.

In some embodiments, the electrode assembly 52 further includes a separator 13. The separator 13 is disposed between the positive electrode plate 11 and the negative electrode plate 12 to serve a function of isolation. The type of the separator 13 is not particularly limited in this application, and may be any well-known porous separator that is highly stable both chemically and mechanically. In some embodiments, the material of the separator 13 may be one or more selected from glass fiber, non-woven fabric, polyethylene, polypropylene, and polyvinylidene difluoride. The separator 13 may be a single-layer film or a multilayer composite film. When the separator 13 is a multilayer composite film, materials of different layers may be identical or different.

The electrode assembly 52 may be in various shapes. For example, the electrode assembly 52 may be in a flat shape, a cuboidal shape, or another shape.

As shown in FIG. 1, in some embodiments, the electrode assembly 52 is in a flat shape, and the positive electrode plate 11 and the negative electrode plate 12 are wound along a winding direction A to form a jelly-roll structure. The jelly-roll structure includes a bend region B and a flat straight region C connected to the bend region B. In an embodiment of this application, the winding direction A is a direction in which the positive electrode plate 11 and the negative electrode plate 12 are circumferentially wound from inside out. In FIG. 1, the winding direction A is a clockwise direction.

The positive electrode plate 11 and the negative electrode plate 12 each include at least one bend portion located in the bend region B. The bend region B is a region that includes a bend structure on the electrode assembly 52. Apart that is of the positive electrode plate 11 and that is located in the bend region B (that is, a positive bend portion 111 of the positive electrode plate 11) and a part that is of the negative electrode plate 12 and that is located in the bend region B (that is, a negative bend portion 121 of the negative electrode plate 12) are both bent. As an example, the positive bend portion 111 of the positive electrode plate 11 and the negative bend portion 121 of the negative electrode plate 12 are approximately bent into an arc shape.

For example, in the bend region B, the positive bend portion 111 of the positive electrode plate 11 and the negative bend portion 121 of the negative electrode plate 12 are alternately arranged. That is, in the bend region B, the alternate arrangement follows the following order: one negative bend portion 121 of the negative electrode plate 12, one positive bend portion 111 of the positive electrode plate 11, one negative bend portion 121 of the negative electrode plate 12, and so on. Optionally, an innermost positive bend portion 111 of the positive electrode plate 11 is located outside an innermost negative bend portion 121 of the negative electrode plate 12.

Further, the positive electrode plate 11 and the negative electrode plate 12 each include at least one flat straight portion located in the flat straight region C. The flat straight region C is a region that includes a flat straight structure on the electrode assembly 52. Optionally, there are two bend regions B that are connected to two ends of the flat straight region C respectively.

A part that is of the positive electrode plate 11 and that is located in the flat straight region C (that is, a positive flat straight portion 112 of the positive electrode plate 11) and a part that is of the negative electrode plate 12 and that is located in the flat straight region C (that is, a negative flat straight portion 122 of the negative electrode plate 12) are basically flat and straight. The surfaces of both the positive flat straight portion 112 of the positive electrode plate 11 and the negative flat straight portion 122 of the negative electrode plate 12 are approximately flat faces.

At least one positive bend portion 111 in the positive electrode plate 11 is a first bend portion 111a. In the positive electrode plate 11, there may be one or more first bend portions 111a. In the positive electrode plate 11, all the positive bend portions 111 are the first bend portions 111a, or, a part of the positive bend portions 111 are the first bend portions 111a. For example, in the positive electrode plate 11, a part of the positive bend portions 111 are the first bend portions 111a, and another part of the positive bend portions 111 are third bend portions.

At least one negative bend portion 121 in the negative electrode plate 12 is a second bend portion 121a adjacent to the first bend portion 111a. In the negative electrode plate 12, there may be one or more second bend portions 121a. In the negative electrode plate 12, all the negative bend portions 121 are the second bend portions 121a, or, a part of the negative bend portions 121 are the second bend portions 121a. For example, in the negative electrode plate 12, a part of the negative bend portions 121 are the second bend portions 121a, and another part of the negative bend portions 121 are fourth bend portions.

At least a part of the positive active material of the first bend portion 111a includes a polymer coating layer capable of obstructing migration of active ions, but the positive active material of the third bend portion does not include the polymer coating layer capable of obstructing migration of active ions. In addition, the positive active material of the positive flat straight portion 112 does not include the polymer coating layer capable of obstructing migration of active ions either. A ratio of an ionic conductivity λ₁ of the first bend portion 111a to an ionic conductivity λ₂ of the positive flat straight portion 112 satisfies 0 ≤ λ₁/λ₂ < 1. Through a simple treatment process of the positive electrode plate, this application effectively reduces the probability that active ions in a bend region of the electrode assembly are reduced to a simple metal, thereby significantly improving the safety performance of the electrode assembly. At least a part of the positive active material of the first bend portion 111a includes a polymer coating layer capable of obstructing migration of active ions, so that the first bend portion 111a possesses a lower ionic conductivity. During charging, at least a part of the active ions deintercalated from the first bend portion 111a are obstructed by the polymer coating layer from being intercalated into an adjacent second bend portion 121a, thereby effectively reducing the probability that the active ions in the bend region of the electrode assembly are reduced to a simple metal, and significantly improving the safety performance of the electrode assembly.

In some embodiments, at least one innermost positive bend portion 111 in the positive electrode plate 11 is the first bend portion 111a, and at least one innermost negative bend portion 121 in the negative electrode plate 12 is the second bend portion 121a. At the innermost negative bend portion 121 of the j elly-roll structure, the probability of reducing the active ions to a simple metal is the highest. Therefore, such an arrangement significantly improves the safety performance of the electrode assembly.

In some embodiments, 0 ≤ λ₁/λ₂ ≤ 0.9, 0 ≤ λ₁/λ₂ ≤ 0.8, 0 ≤ λ₁/λ₂ ≤ 0.7, 0 ≤ λ₁/λ₂ ≤ 0.6, 0 ≤ λ₁/λ₂ ≤ 0.5, 0 ≤ λ₁/λ₂ ≤ 0.4, 0 ≤ λ₁/λ₂ ≤ 0.3, 0 ≤ λ₁/λ₂ ≤ 0.2, or 0 ≤ λ₁/λ₂ ≤ 0.1.

In some embodiments, λ₁/λ₂ = 0. In this case, all the positive active material of the first bend portion 111a includes the polymer coating layer capable of obstructing migration of active ions. In addition, the polymer coating layer is not capable of conducting ions. In this way, no active ions are intercalated into an adjacent second bend portion 121a during charging, thereby effectively preventing the active ions in the bend region of the electrode assembly from being reduced to a simple metal, and significantly improving the safety performance of the electrode assembly.

In some other embodiments, 0 < λ₁/λ₂ < 1, 0 < λ₁/λ₂ ≤ 0.9, 0 < λ₁/λ₂ ≤ 0.8, 0 < λ₁/λ₂ ≤ 0.7, 0 < λ₁/λ₂ ≤ 0.6, 0 < λ₁/λ₂ ≤ 0.5, 0 < λ₁/λ₂ ≤ 0.4, 0 < λ₁/λ₂ ≤ 0.3, 0 < λ₁/λ₂ ≤ 0.2, or, 0 < λ₁/λ₂ ≤ 0.1. In this case, at least a part of the positive active material of the first bend portion 111a includes a polymer coating layer capable of obstructing migration of active ions, and at least a part of the positive active material does not include the polymer coating layer capable of obstructing migration of active ions; or, all the positive active material of the first bend portion 111a includes a polymer coating layer capable of obstructing migration of active ions, but the polymer coating layer is capable of conducting ions to some extent. With the first bend portion 111a being capable of conducting ions to some extent, a part of active ions deintercalated from the first bend portion 111a can be intercalated into an adjacent second bend portion 121a during charging. In this way, the occurrence of reducing the active ions in the bend region of the electrode assembly to a simple metal is effectively avoided without excessively reducing the energy density of the electrode assembly.

In some embodiments, a thickness of the polymer coating layer is 0.01 µm to 50 µm. Optionally, the thickness of the polymer coating layer is 1 µm to 50 µm, 1 µm to 45 µm, 1 µm to 40 µm, 1 µm to 35 µm, 1 µm to 30 µm, 1 µm to 25 µm, 1 µm to 20 µm, 1 µm to 15 µm, or 1 µm to 10 µm. When the thickness of the polymer coating layer falls within an appropriate range, the occurrence of reducing the active ions in the bend region of the electrode assembly to a simple metal can be avoided effectively without excessively reducing the energy density of the electrode assembly.

In some embodiments, the polymer coating layer is located on 80% to 100% of surfaces of particles of the positive active material. Optionally, the polymer coating layer is located on 95% to 100% of the surfaces of the particles of the positive active material. The polymer coating layer is located on almost all surfaces of the particles of the positive active material, thereby being able to effectively obstruct migration of the active ions and effectively avoid the occurrence of reducing the active ions in the bend region of the electrode assembly to a simple metal.

In some embodiments, the polymer coating layer further includes one or more selected from a plasticizer and an electrolyte salt. The presence of the plasticizer also facilitates formation of a gel-type polymer coating layer. The electrolyte salt increases the ionic conductivity of the polymer coating layer. In this way, the occurrence of reducing the active ions in the bend region of the electrode assembly to a simple metal can be avoided effectively without excessively reducing the energy density of the electrode assembly.

The type of the plasticizer is not particularly limited in this application. In some embodiments, the plasticizer includes one or more selected from ethyl methyl carbonate (EMC), diethyl carbonate (DEC), dimethyl carbonate (DMC), dipropyl carbonate (DPC), methyl propyl carbonate (MPC), ethylene propyl carbonate (EPC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), methyl sulfonyl methane (MSM), ethyl methyl sulfone (EMS), and (ethylsulfonyl)ethane (ESE);

The type of the electrolyte salt is not particularly limited in this application. In some embodiments, the electrolyte salt includes, but is not limited to, one or more of a lithium salt or a sodium salt. Optionally, the lithium salt includes one or more selected from lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato)borate (LiBOB), lithium difluorophosphate (LiPO₂F₂), lithium difluoro(bisoxalato)phosphate (LiDFOP), and lithium tetrafluoro(oxalato)phosphate (LiTFOP). Optionally, the sodium salt includes one or more selected from NaPF₆, NaClO₄, NaBCl₄, NaSO₃CF₃, and Na(CH₃)C₆H₄SO₃.

In some embodiments, based on a total mass of the polymer coating layer, the polymer coating layer includes a polymer at a mass percent of 5% to 100%, the plasticizer at a mass percent of 0% to 80%, and the electrolyte salt at a mass percent of 0% to 20%.

In some embodiments, the polymer coating layer includes a polymer alone.

In some embodiments, based on the total mass of the polymer coating layer, the polymer coating layer includes the polymer at a mass percent greater than or equal to 80% and less than 100%, and the electrolyte salt at a mass percent greater than 0% and less than or equal to 20%. Optionally, based on the total mass of the polymer coating layer, the polymer coating layer includes the polymer at a mass percent of 81% to 99%, and the electrolyte salt at a mass percent of 1% to 19%.

In some embodiments, based on the total mass of the polymer coating layer, the polymer coating layer includes the polymer at a mass percent greater than or equal to 20% and less than 100%, and the plasticizer at a mass percent greater than 0% and less than or equal to 80 %. Optionally, based on the total mass of the polymer coating layer, the polymer coating layer includes the polymer at a mass percent of 21% to 99%, and the plasticizer at a mass percent of 1% to 79 %.

In some embodiments, based on the total mass of the polymer coating layer, the polymer coating layer includes the polymer at a mass percent greater than or equal to 5% and less than 100%, the plasticizer at a mass percent greater than 0% and less than or equal to 80%, and the electrolyte salt at a mass percent greater than 0% and less than or equal to 20%. Optionally, based on the total mass of the polymer coating layer, the polymer coating layer includes the polymer at a mass percent of 6% to 99%, the plasticizer at a mass percent of 0.5% to 79%, and the electrolyte salt at a mass percent of 0.5% to 19%.

In some embodiments, the polymer coating layer is formed by in-situ polymerizing and curing a coating composition that includes at least one monomer.

As an example, the first monomer is ring-opening polymerizable or includes a polymerizable unsaturated bond such as a carbon-carbon double bond and a carbon-carbon triple bond. Optionally, the first monomer is one or more selected from a carbonate monomer, a sulfate monomer, a sulfonate monomer, a phosphate monomer, a carboxylate monomer, a sulfone monomer, an amide monomer, a nitrile monomer, and an ether monomer.

Examples of the carbonate monomer include, but are not limited to, one or more of vinylene carbonate (VC), vinyl ethylene carbonate (VEC), ethylene carbonate (EC), propylene carbonate (PC), butylene carbonate, fluoroethylene carbonate, or chloroethylene carbonate. Examples of the sulfate monomer include, but are not limited to, vinyl ethylene sulfite, ethylene sulfite, 4-methyl ethylene sulfate, and 4-ethyl ethylene sulfate. Examples of the sulfonate monomer include, but are not limited to, 1,3-propene sultone, 1,3-propane sultone, 1,4-butane sultone, and methylene methane disulfonate. Examples of the phosphate monomer include, but are not limited to, one or more of dimethyl vinyl phosphate, diethyl vinyl phosphate, diethyl propenyl phosphate, diethyl butenyl phosphate, 2-diethoxyphosphorylbut-1-ene, diethylethynyl phosphate, vinyl trifluoromethyl phosphate, vinyl-1-trifluoroethyl phosphate, diethyl fluorovinyl phosphate, or 1-trifluoropropenyl ethyl phosphate. Examples of the carboxylate monomer include, but are not limited to, vinyl acetate. Examples of the sulfone monomer include, but are not limited to, one or more of methyl vinyl sulfone, ethyl vinyl sulfone, cyclobutene sulfone, sulfolane, or ethylene sulfoxide. Examples of the amide monomer include, but are not limited to, acrylamide. Examples of the nitrile monomer include, but are not limited to, one or more of acrylonitrile, succinonitrile, glutaronitrile, or adiponitrile. Examples of the ether monomer include, but are not limited to, one or more of 1,3-dioxolane, ethylene oxide, 1,2-propylene oxide, 4-methyl-1,3-dioxolane, tetrahydrofuran, 2-methyl tetrahydrofuran, 1,4-dioxane, ethylene glycol dimethyl ether, ethylene glycol diglycidyl ether, or triethylene glycol divinyl ether.

As an example, the second monomer is cross-linkable. Optionally, the second monomer is one or more selected from acrylate monomers.

Examples of the acrylate monomers include, but are not limited to, one or more of acrylic acid, methacrylic acid, methyl methacrylate, butyl methacrylate, methyl acrylate, ethyl acrylate, hydroxyethyl acrylate, hydroxyethyl methacrylate, butyl acrylate, isodecyl acrylate, isooctyl acrylate, lauryl acrylate, isobornyl acrylate, isobornyl methacrylate, carbitol acrylate, cyanoacrylate, caprolactone acrylate, 2-phenoxyethyl acrylate, tetrahydrofuran acrylate, ethoxylated tetrahydrofuran acrylate, cyclotrimethylolpropane acrylate, 2-carboxyethyl acrylate, cyclohexyl acrylate, ethylene glycol diacrylate, ethylene glycol dimethacrylate, propylene glycol dimethacrylate, diethylene glycol diacrylate, diethylene glycol dimethacrylate, triethylene glycol diacrylate, triethylene glycol dimethacrylate, tetraethylene glycol diacrylate, tetraethylene glycol dimethacrylate, 1,4-butanediol diacrylate, 1,4-butanediol dimethacrylate, 1,3-butanediol diacrylate, 1,3-butanediol dimethacrylate, 1,6-hexanediol diacrylate, 1,6-hexanediol dimethacrylate, dipropylene glycol diacrylate, dipropylene glycol dimethacrylate, tripropylene glycol diacrylate, tripropylene glycol dimethacrylate, neopentyl glycol diacrylate, neopentyl glycol dimethacrylate, 2(propoxylated) neopentyl glycol diacrylate, polyethylene glycol diacrylate (PEGDA), polyethylene glycol dimethacrylate, polypropylene glycol dimethacrylate, polycyclohexyl acrylate, methoxyl polyethylene glycol acrylate, ethoxylated trimethylolpropane triacrylate, trimethylol propane trimethacrylate, methoxyl polyethylene glycol methacrylate, pentaerythritol triacrylate, propoxylated glycerol triacrylate (GPTA), tris(2-hydroxyethyl) isocyanurate triacrylate, bis(trimethylolpropane) tetraacrylate, pentaerythritol tetraacrylate, 4(ethoxyl)pentaerythritol tetraacrylate, or dipentaerythritol hexaacrylate.

Optionally, the acrylate monomers include one or more selected from ethylene glycol diacrylate, ethylene glycol dimethacrylate, propylene glycol dimethacrylate, diethylene glycol diacrylate, diethylene glycol dimethacrylate, triethylene glycol diacrylate, triethylene glycol dimethacrylate, tetraethylene glycol diacrylate, tetraethylene glycol dimethacrylate, 1,4-butanediol diacrylate, 1,4-butanediol dimethacrylate, 1,3-butanediol diacrylate, 1,3-butanediol dimethacrylate, 1,6-hexanediol diacrylate, 1,6-hexanediol dimethacrylate, dipropylene glycol diacrylate, dipropylene glycol dimethacrylate, tripropylene glycol diacrylate, tripropylene glycol dimethacrylate, neopentyl glycol diacrylate, neopentyl glycol dimethacrylate, 2(propoxylated) neopentyl glycol diacrylate, polyethylene glycol diacrylate, polyethylene glycol dimethacrylate, polypropylene glycol dimethacrylate, polycyclohexyl acrylate, methoxyl polyethylene glycol acrylate, ethoxylated trimethylolpropane triacrylate, trimethylol propane trimethacrylate, methoxyl polyethylene glycol methacrylate, pentaerythritol triacrylate, propoxylated glycerol triacrylate, tris(2-hydroxyethyl) isocyanurate triacrylate, bis(trimethylolpropane) tetraacrylate, pentaerythritol tetraacrylate, 4(ethoxyl)pentaerythritol tetraacrylate, and dipentaerythritol hexaacrylate. Such acrylate monomers are multifunctional, highly reactive, quick to cure, and of high chemical resistance.

In some embodiments, the monomer includes one or more of a first monomer or a second monomer. For example, the monomer is the first monomer, or the monomer includes both the first monomer and the second monomer. Optionally, a mass ratio between the first monomer and the second monomer is (1 to 99): (99 to 1). Further, the mass ratio between the first monomer and the second monomer is (5 to 95): (95 to 5), (10 to 90): (90 to 10), (15 to 85): (85 to 15), (20 to 80): (80 to 20), (25 to 75): (75 to 25), (30 to 70): (70 to 30), (35 to 65): (65 to 35), (40 to 60): (60 to 40), or (45 to 55): (55 to 45).

In some embodiments, the coating composition further includes one or more selected from a plasticizer and an electrolyte salt. The plasticizer can adjust the viscosity of the coating composition, and facilitate a coating operation. The presence of the plasticizer further facilitates formation of a gel-type polymer coating layer. The electrolyte salt increases the ionic conductivity of the polymer coating layer. In this way, the occurrence of reducing the active ions in the bend region of the electrode assembly to a simple metal can be avoided effectively without excessively reducing the energy density of the electrode assembly.

The type of the plasticizer is not particularly limited in this application. In some embodiments, the plasticizer includes one or more selected from ethyl methyl carbonate (EMC), diethyl carbonate (DEC), dimethyl carbonate (DMC), dipropyl carbonate (DPC), methyl propyl carbonate (MPC), ethylene propyl carbonate (EPC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), methyl sulfonyl methane (MSM), ethyl methyl sulfone (EMS), and (ethylsulfonyl)ethane (ESE);

The type of the electrolyte salt is not particularly limited in this application. In some embodiments, the electrolyte salt includes, but is not limited to, one or more of a lithium salt or a sodium salt. Optionally, the lithium salt includes one or more selected from lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato)borate (LiBOB), lithium difluorophosphate (LiPO₂F₂), lithium difluoro(bisoxalato)phosphate (LiDFOP), and lithium tetrafluoro(oxalato)phosphate (LiTFOP). Optionally, the sodium salt includes one or more selected from NaPF₆, NaClO₄, NaBCl₄, NaSO₃CF₃, and Na(CH₃)C₆H₄SO₃.

In some embodiments, based on a total mass of the coating composition, the coating composition includes a monomer at a mass percent of 5% to 100%, the plasticizer at a mass percent of 0% to 80%, and the electrolyte salt at a mass percent of 0% to 20%.

In some embodiments, the coating composition includes a monomer alone.

In some embodiments, the coating composition includes a monomer and an electrolyte salt. Based on the total mass of the coating composition, the coating composition includes the monomer at a mass percent greater than or equal to 80% and less than 100%, and the electrolyte salt at a mass percent greater than 0% and less than or equal to 20%. Optionally, based on the total mass of the coating composition, the coating composition includes the monomer at a mass percent of 81% to 99%, and the electrolyte salt at a mass percent of 1% to 19%.

In some embodiments, the coating composition includes a monomer and a plasticizer. Based on the total mass of the coating composition, the coating composition includes the monomer at a mass percent greater than or equal to 20% and less than 100%, and the plasticizer at a mass percent greater than 0% and less than or equal to 80%. Based on the total mass of the coating composition, the coating composition includes the monomer at a mass percent of 21% to 99%, and the plasticizer at a mass percent of 1% to 79 %.

In some embodiments, the coating composition includes a monomer, a plasticizer, and an electrolyte salt. Based on the total mass of the coating composition, the coating composition includes the monomer at a mass percent greater than or equal to 5% and less than 100%, the plasticizer at a mass percent greater than 0% and less than or equal to 80%, and the electrolyte salt at a mass percent greater than 0% and less than or equal to 20%. Optionally, based on the total mass of the coating composition, the coating composition includes the monomer at a mass percent of 6 % to 99 %, the plasticizer at a mass percent of 0.5 % to 79 %, and the electrolyte salt at a mass percent of 0.5 % to 19 %.

In some embodiments, a viscosity of the coating composition is 3 cp to 100 cp. The viscosity of the coating composition may be achieved by adjusting one or more of: the type of the first monomer, the mass percent of the first monomer, the type of the second monomer, the mass percent of the second monomer, the type of the electrolyte salt, the mass percent of the electrolyte salt, the type of the plasticizer, or the mass percent of the plasticizer. In addition, when the viscosity of the coating composition is controlled within an appropriate range, the coating composition facilitates formation of a polymer coating layer on most of the surface of the positive active material of the first bend portion, and facilitates adjustment of the ionic conductivity of the first bend portion.

In some embodiments, a polymerization method used to form the polymer coating layer by in-situ polymerizing and curing the monomer includes one or more selected from light-initiated polymerization, radiation-initiated polymerization, and initiator-initiated polymerization.

For example, the polymerization method used to form the polymer coating layer by in-situ polymerizing and curing the monomer is light-initiated polymerization. The power density of the light is not particularly limited in this application, as long as the monomer can be polymerized. Optionally, the power density of the light is 2 W/cm² to 5 W/cm². The time of the light-initiated polymerization is not particularly limited in this application, as long as the monomer can be polymerized. optionally, the light-initiated polymerization lasts for a time of 10 s to 300 s. In some embodiments, the coating composition may further include a photosensitizer (Photosensitizer). The photosensitizer is a compound that absorbs energy in an ultraviolet light region (250 to 420 nm) or a visible light region (400 to 800 nm) to generate free radicals, cations, and the like, so as to initiate the polymerization and curing of a monomer. Based on the total mass of the monomer, a mass percent of the photosensitizer is less than or equal to 5%. Optionally, the mass percent of the photosensitizer is less than or equal to 2%. The type of the photosensitizer is not particularly limited in this application, as long as the monomer can be polymerized. As an example, the photosensitizer may include, but without being limited to, one or more of: benzoin or a derivative thereof, an acetophenone derivative, an α-hydroxyketone derivative, an α-aminoketone derivative, an acyl phosphorus oxide, benzophenone or a derivative thereof, or, thioxanthone or a derivative thereof.

For example, the polymerization method used to form the polymer coating layer by in-situ polymerizing and curing the monomer is radiation-initiated polymerization. The type of a radiation ray used in the radiation-initiated polymerization is not particularly limited in this application, as long as the monomer can be polymerized. In some embodiments, the radiation ray includes one or more selected from α ray, β ray, γ ray, X ray, neutron beam, and electron beam. The total dosage of radiation used in the radiation-initiated polymerization is not particularly limited in this application, as long as the monomer can be polymerized. In some embodiments, the total dosage of radiation is 30 Gy to 30 kGy.

For example, the polymerization method used to form the polymer coating layer by in-situ polymerizing and curing the monomer is initiator-initiated polymerization. In some embodiments, a temperature of the initiator-initiated polymerization is 50 °C to 85 °C, and the initiator-initiated polymerization lasts for a time of 1 h to 12 h. Based on the total mass of the monomer, a mass percent of the initiator is less than or equal to 5%. Optionally, the mass percent of the initiator is less than or equal to 2%. The type of the initiator is not particularly limited in this application, as long as the monomer can be polymerized. In some embodiments, the initiator includes one or more of an organic peroxygen-based initiator, an inorganic peroxygen-based initiator, or an azo-based initiator. Examples of the organic peroxygen-based initiator include, but are not limited to, one or more of dibenzoyl peroxide (BPO), lauroyl peroxide, tert-butyl peroxybenzoate, tert-butyl peroxypivalate, diisopropyl peroxydicarbonate, or dicyclohexyl peroxydicarbonate. Examples of the inorganic peroxygen-based initiator include, but are not limited to, one of potassium persulfate or ammonium persulfate or both thereof. Examples of the azo-based initiator include, but are not limited to, one of azobisisobutyronitrile (AIBN) or azobisisoheptanenitrile, or both thereof.

In the electrode assembly according to this application, by adjusting one or more of the type of the first monomer, the mass percent of the first monomer, the type of the second monomer, the mass percent of the second monomer, the type of the electrolyte salt, the mass percent of the electrolyte salt, the type of the plasticizer, the mass percent of the plasticizer, the type of the initiator, the mass percent of the initiator, the monomer polymerization initiation method, technical parameters of the monomer polymerization initiation, or the like, the ratio of the ionic conductivity λ₁ of the first bend portion to the ionic conductivity λ₂ of the positive flat straight portion is made to satisfy 0 ≤ λ₁/λ₂ < 1.

According to a formula λ = d/RS, an ionic conductivity ratio between positive electrode plates of the same specifications is equivalent to a reciprocal of an ionic resistance ratio between the positive electrode plates, where λ represents the ionic conductivity, d represents a thickness, R represents the ionic resistance, and S represents an area. Therefore, after the ionic resistance R₁ of the first bend portion and the ionic resistance R₂ of the positive flat straight portion are measured separately, calculation can be performed to obtain the ratio (λ₁/λ₂) of the ionic conductivity λ₁ of the first bend portion to the ionic conductivity λ₂ of the positive flat straight portion, where λ₁/λ₂ = R₂/R₁. The ionic resistance R₁ of the first bend portion and the ionic resistance R₂ of the positive flat straight portion of the positive electrode plate may be measured by using an instrument and method well-known in the art, for example, by using electrochemical impedance spectroscopy. To facilitate calculation, a disc may be cut out from the first bend portion and another disc of the same size may be cut out from the flat straight portion of the positive electrode plate, and then each of the discs is combined with a separator and a lithium metal sheet to form a half battery. Subsequently, an electrolytic solution is injected into the half battery. The half battery is tested by applying electrochemical impedance spectroscopy of an electrochemical workstation, and a Nyquist plot is drawn. The Nyquist plot is analyzed by means of equivalent circuit curve fitting, and a semicircle diameter of the Nyquist plot, that is, a charge transfer resistance Rct, is used as the ionic resistance of the positive electrode plate under test. The test voltage may be 10 mV, and the test frequency may be 0.1 Hz to 100 K Hz.

During preparation of the half battery, when the positive electrode plate is coated with the film layer on both sides, the film layer on one of the two sides is wiped off by using water or another solvent. The area of the lithium metal sheet may be larger than the area of the positive electrode plate. In addition, the electrolytic solution contributes little to the resistance of the half battery, and the contribution is ignorable. Therefore, the ingredients of the electrolytic solution are not particularly limited in this application during preparation of the half battery, and a conventional electrolytic solution in the art may apply. For example, the electrolytic solution may be obtained by performing the following steps: Mixing ethylene carbonate (EC) and ethyl methyl carbonate (EMC) at a volume ratio of 1: 1 to obtain an organic solvent, and then dissolving lithium bisfluorosulfonimide (LiFSI) in the organic solvent to obtain an electrolytic solution in which the concentration of LiFSI is 1 mol/L.

It is hereby noted the positive electrode plate for the purpose of test may be a freshly prepared and cold-calendered positive electrode plate, or a positive electrode plate obtained from a disassembled secondary battery. An illustrative method for obtaining a positive electrode plate from a secondary battery is as follows: Disassembling a fully discharged secondary battery and taking out a positive electrode plate from the secondary battery; soaking the positive electrode plate in an organic solvent (for example, dimethyl carbonate) for a period (for example, 30 min), and then taking out the positive electrode plate and drying the positive electrode plate at a given temperature (for example, 80 °C) for a given period (for example, 6 h).

### [Method for preparing an electrode assembly]

A first aspect of this application further provides an illustrative method for preparing an electrode assembly.

FIG. 2 is a schematic flowchart of a method for preparing an electrode assembly according to some embodiments of this application. As shown in FIG. 2, the method for preparing an electrode assembly according to the first aspect of this application includes: (S100) providing a positive electrode plate containing a positive active material and a negative electrode plate; and (S200) winding the positive electrode plate and the negative electrode plate to form an electrode assembly. The positive electrode plate includes at least one positive bend portion and at least one positive flat straight portion connected to the positive bend portion. At least one positive bend portion in the positive electrode plate is a first bend portion. At least a part of the positive active material of the first bend portion includes a polymer coating layer capable of obstructing migration of active ions. A ratio of an ionic conductivity λ₁ of the first bend portion to an ionic conductivity λ₂ of the positive flat straight portion satisfies 0 ≤ λ₁/λ₂ < 1.

The positive electrode plate and the negative electrode plate are both ribbon-shaped structures. In an embodiment of this application, the positive electrode plate and the negative electrode plate may be sequentially stacked first, and then wound for at least two circles to form an electrode assembly.

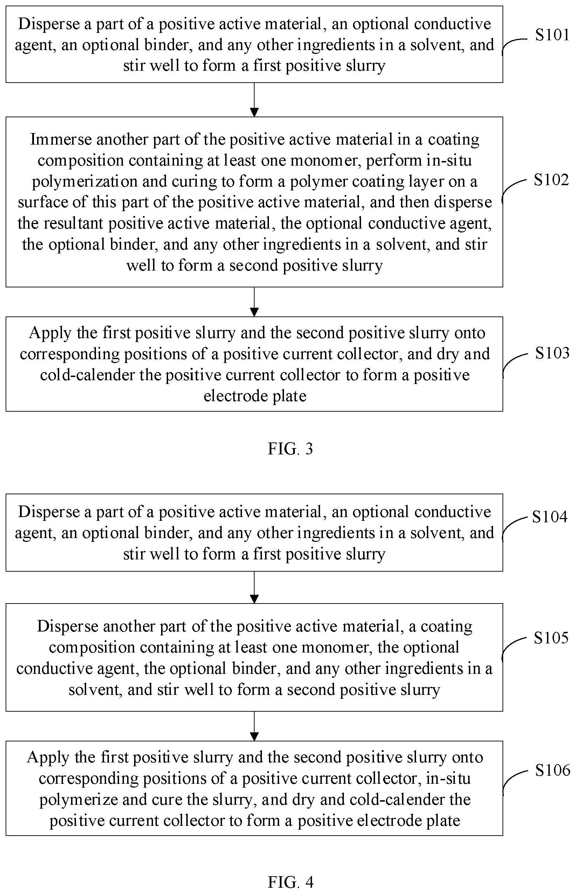

FIG. 3 is a schematic flowchart of a method for preparing a positive electrode plate according to some embodiments of this application. As shown in FIG. 3, the method for preparing a positive electrode plate according to some embodiments of this application includes: (S101) dispersing a part of a positive active material, an optional conductive agent, an optional binder, and any other ingredients in a solvent, and stirring well to form a first positive slurry; (S102) immersing another part of the positive active material in a coating composition containing at least one monomer, performing in-situ polymerization and curing to form a polymer coating layer on a surface of this part of the positive active material, and then dispersing the resultant positive active material, the optional conductive agent, the optional binder, and any other ingredients in a solvent, and stirring well to form a second positive slurry; and (S 103) applying the first positive slurry and the second positive slurry onto corresponding positions of a positive current collector, and drying and cold-calendering the positive current collector to form a positive electrode plate.

FIG. 4 is a schematic flowchart of a method for preparing a positive electrode plate according to some other embodiments of this application. As shown in FIG. 4, the method for preparing a positive electrode plate according to some other embodiments of this application includes: (S104) dispersing a part of a positive active material, an optional conductive agent, an optional binder, and any other ingredients in a solvent, and stirring well to form a first positive slurry; (S105) dispersing another part of the positive active material, a coating composition containing at least one monomer, the optional conductive agent, the optional binder, and any other ingredients in a solvent, and stirring well to form a second positive slurry; and (S106) applying the first positive slurry and the second positive slurry onto corresponding positions of a positive current collector, in-situ polymerizing and curing the slurry, and drying and cold-calendering the positive current collector to form a positive electrode plate.

In some embodiments, the slurry can be applied segmentally by using a double-layer coating device. For example, the second positive slurry may be applied onto a position at which the first bend portion is to be formed, and the first positive slurry is applied onto positions at which the positive flat straight portion and other positive bend portions are to be formed.

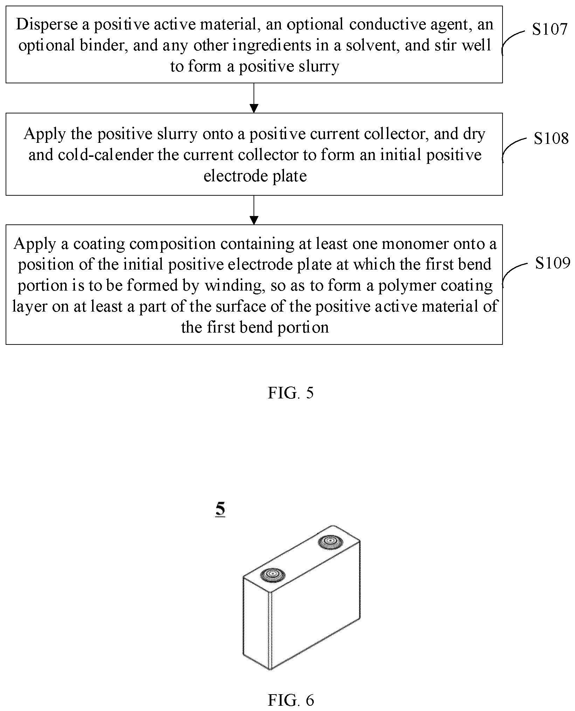

FIG. 5 is a schematic flowchart of a method for preparing a positive electrode plate according to still other embodiments of this application. As shown in FIG. 5, the method for preparing a positive electrode plate according to still other embodiments of this application includes: (S107) dispersing a positive active material, an optional conductive agent, an optional binder, and any other ingredients in a solvent, and stirring well to form a positive slurry; (S108) applying the positive slurry onto a positive current collector, and drying and cold-calendering the current collector to form an initial positive electrode plate; and (S109) applying a coating composition containing at least one monomer onto a position of the initial positive electrode plate at which the first bend portion is to be formed by winding, so as to form a polymer coating layer on at least a part of the surface of the positive active material of the first bend portion.

The illustrative method for preparing a positive electrode plate according to some embodiments of this application ensures the continuity of production of the positive electrode plate, and is highly compatible with existing equipment, and effectively improves the safety performance of the electrode assembly without increasing much weight of the electrode assembly.

The coating methods of the slurry and the coating composition are not particularly limited in this application. For example, the coating methods may be blade coating, gravure coating, slot die coating, dip coating, spray coating, or the like.

During preparation of the electrode assembly based on the foregoing illustrative preparation method, it is not necessary to perform the foregoing steps in sequence. That is, the steps may be performed in the order mentioned in the foregoing embodiments, or the steps may be performed in an order different from the order mentioned in the foregoing embodiments, or several steps may be performed simultaneously. For example, the order is not definite but may be concurrent between step S101 and step S 102, and between step S 104 and step S 105.

It is hereby noted that, for the related structures of the electrode assemblies prepared according to the foregoing preparation methods of an electrode assembly, reference may be made to the descriptions of the electrode assemblies provided in the foregoing embodiments.

### Secondary battery

A second aspect of this application provides a secondary battery. The secondary battery includes the electrode assembly according to the first aspect of this application, and includes an electrolyte. The type of the secondary battery is not particularly limited in this application. For example, the secondary battery may be a lithium-ion battery, a sodium-ion battery, or the like.

The electrolyte serves to conduct active ions between the positive electrode plate and the negative electrode plate. The type of the electrolyte is not particularly limited in this application, and may be selected as required. For example, the electrolyte may be at least one selected from a solid-state electrolyte or a liquid-state electrolyte (that is, electrolytic solution).

In some embodiments, the electrolyte is an electrolytic solution. The electrolytic solution includes an electrolyte salt and a solvent.

The type of the electrolyte salt is not particularly limited, and may be selected as actually required. For example, the electrolyte salt includes one or more selected from a lithium salt applicable to a lithium-ion battery and a sodium salt applicable to a sodium-ion battery. As an example, the lithium salt includes one or more selected from lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato)borate (LiBOB), lithium difluorophosphate (LiPO₂F₂), lithium difluoro(bisoxalato)phosphate (LiDFOP), and lithium tetrafluoro(oxalato)phosphate (LiTFOP). As an example, the sodium salt includes one or more selected from NaPF₆, NaClO₄, NaBCl₄, NaSO₃CF₃, and Na(CH₃)C₆H₄SO₃.

The type of the solvent is not particularly limited, and may be selected as actually required. In some embodiments, as an example, the solvent may include one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), and (ethylsulfonyl)ethane (ESE).

In some embodiments, the electrolytic solution further optionally includes an additive. For example, the additive may include a negative film-forming additive, a positive film-forming additive, and additives that can improve some performance of the battery, for example, an additive that improves overcharge performance of the battery, an additive that improves high-temperature performance of the battery, and an additive that improves low-temperature power performance of the battery, and the like.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The material of the soft package may be plastic such as one or more of polypropylene (PP), polybutylene terephthalate (PBT), or polybutylene succinate (PBS).

The shape of the secondary battery is not particularly limited in this application, and may be a flat shape, a cuboidal shape, or another shape. FIG. 6 shows a cuboid-shaped secondary battery 5 as an example.

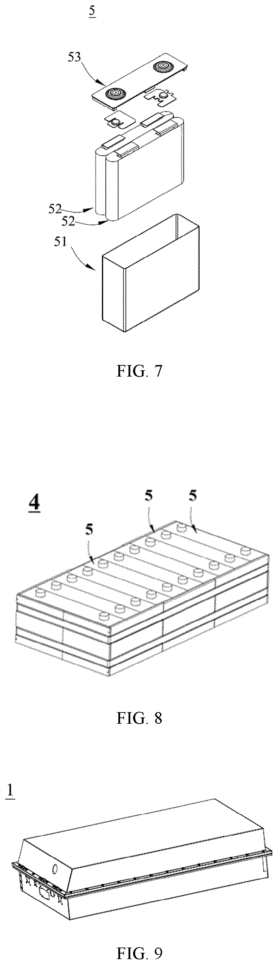

In some embodiments, as shown in FIG. 7, the outer package may include a housing 51 and a cover plate 53. The housing 51 may include a bottom plate and a side plate connected to the bottom plate. The bottom plate and the side plate close in to form an accommodation cavity. The housing 51 is equipped with an opening that communicates with the accommodation cavity. The cover plate 53 is configured to fit and cover the opening to close the accommodation cavity. The electrode assembly 52 according to the first aspect of this application is packaged in the accommodation cavity. The electrolytic solution infiltrates in the electrode assembly 52. The number of electrode assemblies 52 in the secondary battery 5 may be one or more, and is adjustable as required.

The method for preparing a secondary battery in this application is well-known, and the method includes at least the steps of preparing an electrode assembly according to the first aspect of this application. In some embodiments, the electrode assembly may be put into an outer package, dried, and then filled with an electrolytic solution, and steps such as vacuum sealing, static standing, chemical formation, and shaping are performed to obtain a secondary battery.

In some embodiments of this application, the secondary battery according to this application may be assembled to form a battery module. The battery module may contain a plurality of secondary batteries, and the specific number of the secondary batteries in a battery module may be adjusted according to practical applications and capacity of the battery module.

FIG. 8 is a schematic diagram of a battery module 4 as an example. As shown in FIG. 8, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The number of the battery modules contained in a battery pack may be adjusted according to practical applications and the capacity of the battery pack.

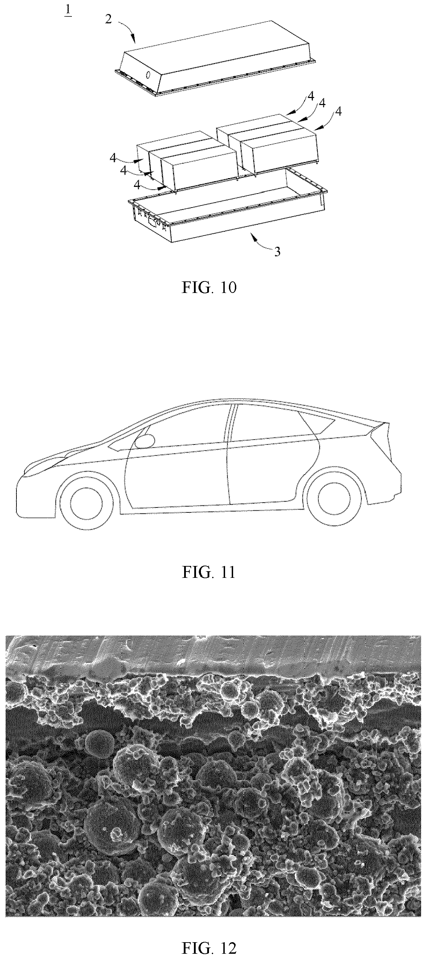

FIG. 9 and FIG. 10 are schematic diagrams of a battery pack 1 as an example. As shown in FIG. 9 and FIG. 10, the battery pack 1 may contain a battery box and a plurality of battery modules 4 disposed in the battery box. The battery box includes an upper box 2 and a lower box 3. The upper box 2 is configured to fit and cover the lower box 3 to form a closed space for accommodating the battery modules 4. The plurality of battery modules 4 may be arranged in the battery box in any manner.

### Electrical device

An embodiment of this application further provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may be, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 11 is a schematic diagram of an electrical device as an example. The electrical device may be a battery electric vehicle, a hybrid electric vehicle, a plug-in hybrid electric vehicle, or the like. A battery pack or a battery module may be employed to meet the requirements of the electrical device for a high power and a high energy density.

In another example, the electrical device may be a mobile phone, a tablet computer, a notebook computer, or the like. The electrical device is generally required to be thin and light, and may employ a secondary battery as a power supply.

### Embodiments

The following embodiments are more detailed descriptions of the subject-matter disclosed herein. The embodiments are merely intended as illustrative descriptions because, evidently, a person skilled in the art may make various modifications and changes to such embodiments without departing from what is disclosed herein. Unless otherwise specified, all fractions, percentages, and ratios mentioned in the following embodiments are values by mass. All reagents used in the embodiments are commercially available or can be synthesized according to conventional methods, and can be directly put into use without a need of further processing. All the instruments used in the embodiments are commercially available.

### Comparative Embodiment 1

Mixing well LiNi_{0.5}Co_{0.2}Mn_{0.3}O₂ (NCM523) as a positive active material, carbon black (Super P) as a conductive agent, and polyvinylidene difluoride (PVDF) as a binder at a mass ratio of 91.6: 1.8: 6.6 in an N-methyl-pyrrolidone (NMP) solvent to make a positive slurry; and coating one surface of a current collector aluminum foil with the prepared positive slurry, drying the aluminum foil in an oven, and performing cold-calendering to obtain a positive electrode plate.

### Embodiments 1 to 20

Mixing a first monomer, a second monomer, a plasticizer, and an electrolyte salt according to the ingredients and mass percent shown in Table 1, and adding azobisisobutyronitrile (AIBN) as an initiator at a mass percent of 1% to obtain the coating composition in Embodiments 1 to 20. In order to more intuitively observe how the capacity of the positive electrode plate is exerted, the coating composition is sprayed on the entire surface of the positive electrode plate prepared in Comparative Embodiment 1, and then in-situ polymerized and cured to obtain the positive electrode plate in Embodiments 1 to 20.

Under a seepage effect, the surface of particles of the positive active material inside the positive electrode plate prepared in Embodiments 1 to 20 can also be coated with the coating composition, and the coating composition is in-situ polymerized and cured to form a polymer coating layer. By controlling the mass of the sprayed liquid, the thickness of the polymer coating layer on the surface of the particles of the positive active material can be adjusted.

In Table 1, the initiator-initiated polymerization is a process of polymerizing the positive electrode plate in a 65 °C oven for 5 hours, and the light-initiated polymerization is a process of polymerizing the positive electrode plate by irradiating the positive electrode plate with an ultraviolet ray for 10 s, where the power density of the ultraviolet ray is 5 W/cm².

Discs of identical sizes are cut out from the positive electrode plates prepared in Comparative Embodiment 1 and Embodiments 1 to 20, and each of the discs is combined with a separator and a lithium metal sheet to form a half battery. Subsequently, an electrolytic solution is injected into the half battery. The half battery is tested by applying electrochemical impedance spectroscopy of a Solartron 1470E CellTest multi-channel electrochemical workstation, and a Nyquist plot is drawn. The Nyquist plot is analyzed with Zview software by means of equivalent circuit curve fitting, and a semicircle diameter of the Nyquist plot, that is, a charge transfer resistance Rct, is used as the resistance of the half battery. The test voltage may be 10 mV, and the test frequency may be 0.1 Hz to 100 K Hz. A porous PE film is used as a separator. A process of preparing an electrolytic solution is as follows: Mixing ethylene carbonate (EC) and ethyl methyl carbonate (EMC) at a volume ratio of 1: 1 to obtain an organic solvent, and then dissolving lithium bisfluorosulfonimide (LiFSI) in the organic solvent to obtain an electrolytic solution in which the concentration of LiFSI is 1 mol/L.

The ratio (λ₁/λ₂) of the ionic conductivity λ₁ of the positive electrode plate prepared in Embodiments 1 to 20 to the ionic conductivity λ₂ of the positive electrode plate prepared in Comparative Embodiment 1 may be represented by a reciprocal of a ratio of a first resistance to a second resistance, where the first resistance is the resistance of the half battery made by using the positive electrode plate prepared in Embodiments 1 to 20, and the second resistance is the resistance of the half battery made by using the positive electrode plate prepared in Comparative Embodiment 1, and the resistances are measured according to the foregoing test methods. Table 2 shows the test results.

The following examines the degree of exerting the capacity of the positive electrode plate.

First, a pouch-type battery is prepared from each of the positive electrode plates of Comparative Embodiment 1 and Embodiments 1 to 20 according to the following steps:

Preparing a negative electrode plate: Mixing well the graphite as a negative active material, carbon black (Super P) as a conductive agent, styrene-butadiene rubber (SBR) as a binder, and sodium carboxymethyl cellulose (CMC-Na) as a thickener at a mass ratio of 95.4: 1.5: 2.5: 0.6 in an appropriate amount of deionized water solvent to form a homogeneous negative slurry. Coating one surface of a current collector copper foil with the negative slurry evenly, and performing drying and cold-calendering to obtain a negative electrode plate.

Preparing a separator: A porous PE film is used as a separator.

Preparing an electrolytic solution: Mixing ethylene carbonate (EC) and ethyl methyl carbonate (EMC) at a volume ratio of 1: 1 to obtain an organic solvent, and then dissolving lithium bisfluorosulfonimide (LiFSI) in the organic solvent to obtain an electrolytic solution in which the concentration of LiFSI is 1 mol/L.

Preparing a pouch-type battery: Stacking a positive electrode plate, a separator, and a negative electrode plate in sequence to form an electrode assembly; placing the electrode assembly into an aluminum plastic film outer package, performing drying and then injecting an electrolytic solution, and performing steps such as vacuum sealing, standing, chemical formation, and shaping to obtain a pouch-type battery.

The following describes a process of testing the capacity performance of a pouch-type battery by using a battery charger discharger:

Leaving a pouch-type battery to stand for 5 minutes, and then charging the battery at a constant current of 0.33 C (46 mA) until the voltage reaches 4.25 V Subsequently, charging the battery at a constant voltage of 4.25 V until the current drops below 0.05 C, and recording a first-cycle charge capacity of the battery. Leaving the battery to stand for 5 minutes, and then discharging the battery at a constant current of 0.33 C until the voltage reaches 2.8 V, and recording a first-cycle discharge capacity of the battery. Table 2 shows the test results.

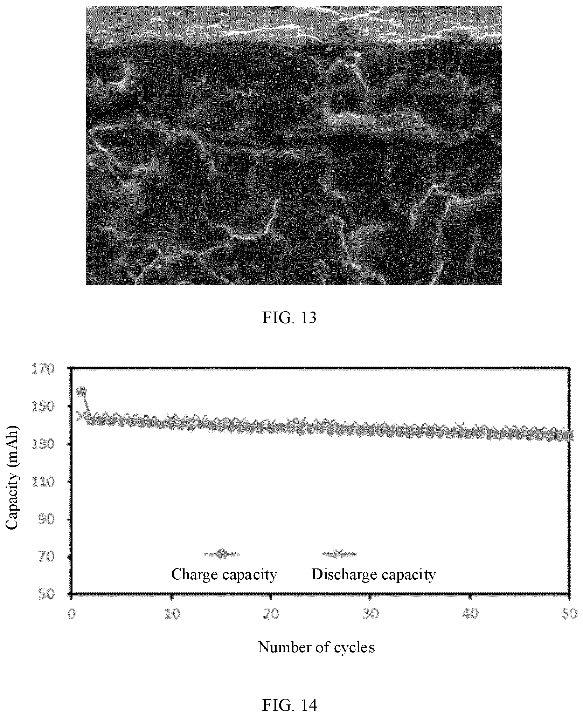

FIG. 12 is a scanning electron microscope image of a positive electrode plate prepared in Comparative Embodiment 1, and FIG. 13 is a scanning electron microscope image of a positive electrode plate prepared in Embodiment 3. As shown in FIG. 13, the coating composition forms a polymer coating layer after being in-situ polymerized and cured on the surface of particles of the positive active material. As can be seen with reference to the test results in Table 2, the polymer coating layer serves a function of obstructing migration of active ions and reducing exertion of the capacity of the positive electrode plate.

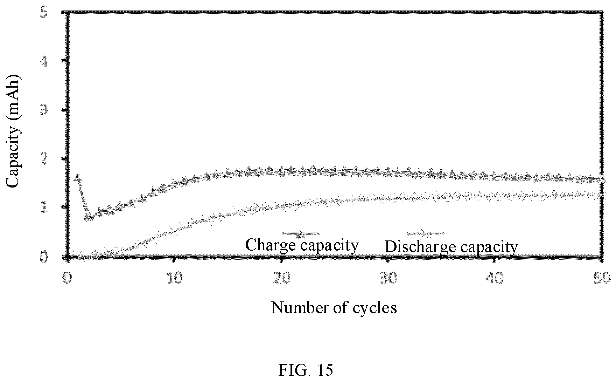

FIG. 14 is a cycle curve of a pouch-type battery prepared in Comparative Embodiment 1, and FIG. 15 is a cycle curve of a pouch-type battery prepared in Embodiment 11. As can be seen from FIG. 14 and FIG. 15, after a polymer coating layer is formed by in-situ polymerization and curing on the surface of the particles of the positive active material, the capacity of the button battery drops significantly. Therefore, after being applied to the bend region of the electrode assembly, the polymer coating layer effectively reduces the probability that active ions in the bend region of the electrode assembly are reduced to a simple metal, and improves the safety performance of the electrode assembly significantly.

Further, as can be seen from the test results of Embodiments 1 to 20, by adjusting the ingredients of the coating composition, the degree of exerting the capacity of the pouch-type battery can be adjusted. In this way, this application can formulate the coating composition appropriately according to the specific capacity of each bend region of the electrode assembly, so as to achieve an optimal effect of significantly improving the safety performance of the electrode assembly without severely reducing the energy density of the electrode assembly.

It is hereby noted that this application is not limited to the foregoing embodiments. The foregoing embodiments are merely examples. Any and all embodiments with substantively the same composition or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

**Table 1**

| Serial number | First monomer | | Second monomer | | Plasticizer | | Electrolyte salt | | Polymer ization initiation method | Thickness of polymer coating layer (µm) |
|---|---|---|---|---|---|---|---|---|---|---|
| | Type | Mass perce nt | Typ e | Mass perce nt | Type | Mass perce nt | Typ e | Mass perc ent | | |
| Compa rative Embod iment 1 | / | / | / | / | / | / | / | / | / | / |
| Embod iment 1 | VC+EC (1: 1) | 35% | PEG | 5% | EMC | 40% | LiF | 20% | Initiator-initiated | 10 |
| | | | DA | | | | SI | | | |
| Embod iment 2 | VC+EC (1: 1) | 35% | PEG | 5% | EMC | 40% | LiF | 20% | Initiator-initiated | 30 |
| | | | DA | | | | SI | | | |
| Embod iment 3 | VC+EC (1: 1) | 35% | PEG | 5% | EMC | 40% | LiF | 20% | Initiator-initiated | 50 |
| | | | DA | | | | SI | | | |
| Embod iment 4 | VC+EC (1: 1) | 35% | PEG | 5% | EMC | 50% | LiF | 10% | Initiator-initiated | 30 |
| | | | DA | | | | SI | | | |
| Embod iment 5 | VC+EC (1: 1) | 30% | PEG | 10% | EMC | 50% | LiF | 10% | Initiator-initiated | 30 |
| | | | DA | | | | SI | | | |
| Embod iment 6 | VC+EC (1: 1) | 35% | PEG | 15% | EMC | 40% | LiF | 10% | Initiator-initiated | 30 |
| | | | DA | | | | SI | | | |
| Embod iment 7 | VC+EC (1: 1) | 40% | PEG | 20% | EMC | 30% | LiF | 10% | Initiator-initiated | 30 |
| | | | DA | | | | SI | | | |
| Embod iment 8 | VC+EC (1: 1) | 45% | PEG | 25% | EMC | 25% | LiF | 5% | Initiator-initiated | 30 |
| | | | DA | | | | SI | | | |
| Embod iment 9 | VC+EC (1: 1) | 35% | PEG | 50% | EMC | 10% | LiF | 5% | Initiator-initiated | 30 |
| | | | DA | | | | SI | | | |
| Embod iment 10 | VC+EC (1: 1) | 30% | PEG | 60% | EMC | 5% | LiF | 5% | Initiator-initiated | 30 |
| | | | DA | | | | SI | | | |
| Embod iment 11 | VC+EC (1: 1) | 25% | PEG | 75% | / | / | / | / | Initiator-initiated | / |
| | | | DA | | | | | | | |
| Embod iment 12 | VC+EC (1: 1) | 30% | PEG | 10% | EMC | 50% | LiF | 10% | Light-initiated | 30 |
| | | | DA | | | | SI | | | |
| Embod iment 13 | 4-methyl ethylene sulfate | 30% | GPT | 10% | DEC | 50% | LiP | 10% | Initiator-initiated | 30 |
| | | | A | | | | F₆ | | | |
| Embod iment 14 | Methylene methane disulfonate | 30% | GPT | 10% | DMC | 50% | Li | 10% | Initiator-initiated | 30 |
| | | | A | | | | BF₄ | | | |
| Embod iment 15 | Diethyl propenyl phosphate | 30% | GPT | 10% | Methyl formate | 50% | Li | 10% | Initiator-initiated | 30 |
| | | | A | | | | Cl | | | |
| | | | | | | | O₄ | | | |
| Embod iment 16 | Vinyl acetate | 30% | GPT | 10% | Ethyl acetate | 50% | Li | 10% | Initiator-initiated | 30 |
| | | | A | | | | As | | | |
| | | | | | | | F₆ | | | |
| Embod iment 17 | Ethyl vinyl sulfone | 30% | GPT | 10% | Methyl sulfonyl methane | 50% | Li | 10% | Initiator-initiated | 30 |
| | | | A | | | | DF | | | |
| | | | | | | | OB | | | |
| Embod iment 18 | Acrylamide | 30% | GPT | 10% | 1,4-butyrolacton e | 50% | Li | 10% | Initiator-initiated | 30 |
| | | | A | | | | BO | | | |
| | | | | | | | B | | | |
| Embod iment 19 | Acrylonitrile | 30% | GPT | 10% | DEC | 50% | LiP | 10% | Initiator-initiated | 30 |
| | | | A | | | | O₂ | | | |
| | | | | | | | F₂ | | | |
| Embod iment 20 | 1,3-dioxolane | 30% | GPT | 10% | DEC | 50% | Li | 10% | Initiator-initiated | 30 |
| | | | A | | | | DF | | | |
| | | | | | | | OP | | | |

**Table 2**

| Serial number | Resistance of half battery (ohm·cm²) | λ₁/λ₂ | First-cycle charge capacity (mAh) | First-cycle discharge capacity (mAh) |
|---|---|---|---|---|
| Comparative Embodiment 1 | 117.67 | / | 161 | 142 |
| Embodiment 1 | 123.91 | 0.95 | 160 | 140 |
| Embodiment 2 | 130.77 | 0.90 | 158 | 137 |
| Embodiment 3 | 146.99 | 0.80 | 157 | 133 |
| Embodiment 4 | 168.19 | 0.70 | 142 | 120 |
| Embodiment 5 | 196.05 | 0.60 | 132 | 96 |
| Embodiment 6 | 235.34 | 0.50 | 116 | 74 |
| Embodiment 7 | 294.18 | 0.40 | 68 | 46 |
| Embodiment 8 | 392.31 | 0.30 | 51 | 31 |
| Embodiment 9 | 588.56 | 0.20 | 18 | 12 |
| Embodiment 10 | 1176.74 | 0.10 | 6 | 3 |
| Embodiment 11 | 90698.04 | 0 | 2 | 0 |
| Embodiment 12 | 193.16 | 0.60 | 135 | 98 |
| Embodiment 13 | 238.14 | 0.50 | 118 | 72 |
| Embodiment 14 | 170.20 | 0.70 | 139 | 118 |
| Embodiment 15 | 233.24 | 0.50 | 118 | 76 |
| Embodiment 16 | 394.12 | 0.30 | 53 | 38 |
| Embodiment 17 | 166.47 | 0.70 | 142 | 121 |
| Embodiment 18 | 194.16 | 0.60 | 135 | 97 |
| Embodiment 19 | 237.24 | 0.50 | 113 | 71 |
| Embodiment 20 | 167.47 | 0.70 | 143 | 121 |

## Claims

1. An electrode assembly, comprising a positive electrode plate containing a positive active material and a negative electrode plate, wherein the positive electrode plate comprises at least one positive bend portion and at least one positive flat straight portion connected to the positive bend portion,
wherein,
at least one positive bend portion in the positive electrode plate is a first bend portion, at least a part of the positive active material of the first bend portion comprises a polymer coating layer capable of obstructing migration of active ions, and a ratio of an ionic conductivity λ₁ of the first bend portion to an ionic conductivity λ₂ of the positive flat straight portion satisfies 0 ≤ λ₁/λ₂ < 1.

2. The electrode assembly according to claim 1, wherein 0 ≤ λ₁/λ₂ ≤ 0.9, and optionally, 0 < λ₁/λ₂ ≤ 0.9.

3. The electrode assembly according to claim 1 or 2, wherein the electrode assembly is a jelly-roll structure, and, in the jelly-roll structure, at least one innermost positive bend portion in the positive electrode plate is the first bend portion.

4. The electrode assembly according to any one of claims 1 to 3, wherein a thickness of the polymer coating layer is 0.01 µm to 50 µm, and optionally 1 µm to 10 µm.

5. The electrode assembly according to any one of claims 1 to 4, wherein the polymer coating layer is located on 80% to 100% of surfaces of particles of the positive active material, and optionally 95% to 100% of the surfaces.

6. The electrode assembly according to any one of claims 1 to 5, wherein the polymer coating layer further comprises one or more selected from a plasticizer and an electrolyte salt,
optionally, the plasticizer comprises one or more selected from ethyl methyl carbonate, diethyl carbonate, dimethyl carbonate, dipropyl carbonate, methyl propyl carbonate, ethylene propyl carbonate, methyl formate, methyl acetate, ethyl acetate, propyl acetate, methyl propionate, ethyl propionate, propyl propionate, methyl butyrate, ethyl butyrate, 1,4-butyrolactone, methyl sulfonyl methane, ethyl methyl sulfone, and (ethylsulfonyl)ethane; and
optionally, the electrolyte salt comprises one or more selected from a lithium salt and a sodium salt, and optionally, the electrolyte salt comprises one or more selected from lithium hexafluorophosphate, lithium tetrafluoroborate, lithium perchlorate, lithium hexafluoroarsenate, lithium bisfluorosulfonimide, lithium bis(trifluoromethanesulfonyl)imide, lithium trifluoromethanesulfonate, lithium difluoro(oxalato)borate, lithium bis(oxalato)borate, lithium difluorophosphate, lithium difluoro(bisoxalato)phosphate, lithium tetrafluoro(oxalato)phosphate, NaPF₆, NaClO₄, NaBCl₄, NaSO₃CF₃, and Na(CH₃)C₆H₄SO₃.

7. The electrode assembly according to claim 6, wherein, based on a total mass of the polymer coating layer, the polymer coating layer comprises a polymer at a mass percent of 5% to 100%, the plasticizer at a mass percent of 0% to 80%, and the electrolyte salt at a mass percent of 0% to 20%.

8. The electrode assembly according to any one of claims 1 to 7, wherein the polymer coating layer is formed by in-situ polymerizing and curing a coating composition that comprises at least one monomer.

9. The electrode assembly according to claim 8, wherein
the monomer comprises one or more of a first monomer or a second monomer;
the first monomer is ring-opening polymerizable or comprises a polymerizable unsaturated bond, and optionally, the first monomer is one or more selected from a carbonate monomer, a sulfate monomer, a sulfonate monomer, a phosphate monomer, a carboxylate monomer, a sulfone monomer, an amide monomer, a nitrile monomer, and an ether monomer; and
the second monomer is cross-linkable, and optionally, the second monomer is one or more selected from acrylate monomers.

10. The electrode assembly according to claim 9, wherein the monomer is the first monomer.

11. The electrode assembly according to claim 9, wherein the monomer comprises both the first monomer and the second monomer, and a mass ratio between the first monomer and the second monomer is (1 to 99): (99 to 1), and optionally (25 to 75): (75 to 25).

12. The electrode assembly according to any one of claims 9 to 11, wherein
the carbonate monomer comprises one or more selected from vinylene carbonate, vinyl ethylene carbonate, ethylene carbonate, propylene carbonate, butylene carbonate, fluoroethylene carbonate, and chloroethylene carbonate; and/or
the sulfate monomer comprises one or more selected from vinyl ethylene sulfite, ethylene sulfite, 4-methyl ethylene sulfate, and 4-ethyl ethylene sulfate; and/or
the sulfonate monomer is one or more selected from 1,3-propene sultone, 1,3-propane sultone, 1,4-butane sultone, and methylene methane disulfonate; and/or
the phosphate monomer comprises one or more selected from dimethyl vinyl phosphate, diethyl vinyl phosphate, diethyl propenyl phosphate, diethyl butenyl phosphate, 2-diethoxyphosphorylbut-1-ene, diethylethynyl phosphate, vinyl trifluoromethyl phosphate, vinyl-1-trifluoroethyl phosphate, diethyl fluorovinyl phosphate, and 1-trifluoropropenyl ethyl phosphate; and/or
the carboxylate monomer comprises vinyl acetate; and/or
the sulfone monomer comprises one or more selected from methyl vinyl sulfone, ethyl vinyl sulfone, cyclobutene sulfone, sulfolane, and ethylene sulfoxide; and/or
the amide monomer comprises acrylamide; and/or
the nitrile monomer comprises one or more selected from acrylonitrile, succinonitrile, glutaronitrile, and adiponitrile; and/or
the ether monomer comprises one or more selected from 1,3-dioxolane, ethylene oxide, 1,2-propylene oxide, 4-methyl-1,3-dioxolane, tetrahydrofuran, 2-methyl tetrahydrofuran, 1,4-dioxane, ethylene glycol dimethyl ether, ethylene glycol diglycidyl ether, and triethylene glycol divinyl ether; and/or
the acrylate monomers comprise one or more selected from acrylic acid, methacrylic acid, methyl methacrylate, butyl methacrylate, methyl acrylate, ethyl acrylate, hydroxyethyl acrylate, hydroxyethyl methacrylate, butyl acrylate, isodecyl acrylate, isooctyl acrylate, lauryl acrylate, isobornyl acrylate, isobornyl methacrylate, carbitol acrylate, cyanoacrylate, caprolactone acrylate, 2-phenoxyethyl acrylate, tetrahydrofuran acrylate, ethoxylated tetrahydrofuran acrylate, cyclotrimethylolpropane acrylate, 2-carboxyethyl acrylate, cyclohexyl acrylate, ethylene glycol diacrylate, ethylene glycol dimethacrylate, propylene glycol dimethacrylate, diethylene glycol diacrylate, diethylene glycol dimethacrylate, triethylene glycol diacrylate, triethylene glycol dimethacrylate, tetraethylene glycol diacrylate, tetraethylene glycol dimethacrylate, 1,4-butanediol diacrylate, 1,4-butanediol dimethacrylate, 1,3-butanediol diacrylate, 1,3-butanediol dimethacrylate, 1,6-hexanediol diacrylate, 1,6-hexanediol dimethacrylate, dipropylene glycol diacrylate, dipropylene glycol dimethacrylate, tripropylene glycol diacrylate, tripropylene glycol dimethacrylate, neopentyl glycol diacrylate, neopentyl glycol dimethacrylate, 2(propoxylated) neopentyl glycol diacrylate, polyethylene glycol diacrylate, polyethylene glycol dimethacrylate, polypropylene glycol dimethacrylate, polycyclohexyl acrylate, methoxyl polyethylene glycol acrylate, ethoxylated trimethylolpropane triacrylate, trimethylol propane trimethacrylate, methoxyl polyethylene glycol methacrylate, pentaerythritol triacrylate, propoxylated glycerol triacrylate, tris(2-hydroxyethyl) isocyanurate triacrylate, bis(trimethylolpropane) tetraacrylate, pentaerythritol tetraacrylate, 4(ethoxyl)pentaerythritol tetraacrylate, and dipentaerythritol hexaacrylate.

13. The electrode assembly according to any one of claims 8 to 12, wherein the coating composition further comprises one or more selected from a plasticizer and an electrolyte salt;
optionally, the plasticizer comprises one or more selected from ethyl methyl carbonate, diethyl carbonate, dimethyl carbonate, dipropyl carbonate, methyl propyl carbonate, ethylene propyl carbonate, methyl formate, methyl acetate, ethyl acetate, propyl acetate, methyl propionate, ethyl propionate, propyl propionate, methyl butyrate, ethyl butyrate, 1,4-butyrolactone, methyl sulfonyl methane, ethyl methyl sulfone, and (ethylsulfonyl)ethane; and
optionally, the electrolyte salt comprises one or more selected from a lithium salt and a sodium salt, and optionally, the electrolyte salt comprises one or more selected from lithium hexafluorophosphate, lithium tetrafluoroborate, lithium perchlorate, lithium hexafluoroarsenate, lithium bisfluorosulfonimide, lithium bis(trifluoromethanesulfonyl)imide, lithium trifluoromethanesulfonate, lithium difluoro(oxalato)borate, lithium bis(oxalato)borate, lithium difluorophosphate, lithium difluoro(bisoxalato)phosphate, lithium tetrafluoro(oxalato)phosphate, NaPF₆, NaClO₄, NaBCl₄, NaSO₃CF₃, and Na(CH₃)C₆H₄SO₃.

14. The electrode assembly according to claim 13, wherein, based on a total mass of the coating composition, the coating composition comprises a monomer at a mass percent of 5% to 100%, the plasticizer at a mass percent of 0% to 80%, and the electrolyte salt at a mass percent of 0% to 20%.

15. The electrode assembly according to any one of claims 8 to 14, wherein a viscosity of the coating composition is 3 cp to 100 cp.

16. The electrode assembly according to any one of claims 8 to 15, wherein a polymerization method used to form the polymer coating layer by in-situ polymerizing and curing the monomer comprises one or more selected from light-initiated polymerization, radiation-initiated polymerization, and initiator-initiated polymerization;
optionally, a power density of the light is 2 W/cm² to 5 W/cm², and the light-initiated polymerization lasts for a time of 10 s to 300 s;
optionally, a total dosage of the radiation is 30 Gy to 30 kGy; and
optionally, a temperature of the initiator-initiated polymerization is 50 °C to 85 °C, and the initiator-initiated polymerization lasts for a time of 1 h to 12 h.

17. The electrode assembly according to claim 16, wherein, based on a total mass of the monomer, a mass percent of the initiator is less than or equal to 5%, and optionally, less than or equal to 2%.

18. A secondary battery, comprising the electrode assembly according to any one of claims 1 to 17.

19. A battery module, comprising the secondary battery according to claim 18.

20. A battery pack, comprising the battery module according to claim 19.

21. An electrical device, comprising at least one of the secondary battery according to claim 18, the battery module according to claim 19, or the battery pack according to claim 20.
